# EUROPEAN PATENT APPLICATION

(11) **EP 4 723 074 A1**
(43) Date of publication of application: **08.04.2026**
(21) Application number: 24810864.9
(22) Date of filing: 02.05.2024
(51) Int. Cl.: G08B 15/02, B25J 5/00, B64U 10/13, B64U 20/87, B64U 70/92, B64U 80/80, G05D 1/43, G05D 1/46, G05D 1/661, G05D 1/683, G05D 1/686, G05D 1/692, G08B 13/19, G08B 15/00, G08B 21/00, G08B 25/00, G08B 25/10, B64U 101/28, B64U 101/31

(54) **TRACKING ROBOT, TRACKING SYSTEM, AND DRONE**

(30) Priority: 24.05.2023 JP 2023085606; 29.05.2023 JP 2023088128; 08.08.2023 JP 2023129401; 08.08.2023 JP 2023129444; 15.01.2024 JP 2024003926
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/016870
(87) International publication number: WO 2024/241856

(57) **Abstract**

A tracking robot according to an embodiment includes a drone capable of tracking a suspicious object and firing a tracking mark toward the suspicious object, a robot main body capable of traveling autonomously in which the drone is capable of arriving and departing, a detection unit that detects a situation around a robot main body portion, and a control unit that controls the drone and causes the main body portion to travel autonomously depending on the situation detected by the detection unit. In a case where the suspicious object is detected, the control unit causes the drone to depart from the robot main body and fires a tracking mark from the drone toward the suspicious object.

## Description

### Field

The disclosed embodiments relate to a tracking robot, tracking system, and drone.

### Background

Conventionally, a system in which a drone is caused to take off from a vehicle, and the vehicle and a periphery of the vehicle are photographed by a camera provided in the drone in a case where the vehicle is damaged has been known (see, for example, Patent Literature 1).

### Citation List

### Patent Literature

Patent Literature 1: Japanese Patent Application Publication No. 2020-93618

### Summary

### Technical Problem

A conventional technology has a problem that a suspicious object cannot be tracked in a case where the suspicious object is detected and the suspicious object escapes, for example.

The present invention has been made in view of the above, and an object thereof is to track a suspicious object.

### Solution to Problem

A tracking robot according to an aspect of an embodiment includes a drone capable of tracking a suspicious object and firing a tracking mark toward the suspicious object, a robot main body capable of traveling autonomously in which the drone is capable of arriving and departing, a detection unit that detects a situation around a robot main body portion, and a control unit that controls the drone and causes the main body portion to travel autonomously depending on the situation detected by the detection unit. In a case where the suspicious object is detected, the control unit causes the drone to depart from the robot main body and fires the tracking mark from the drone toward the suspicious object.

### Advantageous Effects of Invention

According to one aspect of embodiments, it is possible to track a suspicious object.

### Brief Description of Drawings

FIG. 1 is a view schematically illustrating a tracking system according to a first embodiment.
FIG. 2 is a view schematically illustrating a tracking robot according to the first embodiment.
FIG. 3 is a functional block diagram schematically illustrating a control device of the tracking robot according to the first embodiment.
FIG. 4 is a functional block diagram schematically illustrating a management device according to the first embodiment.
FIG. 5 is a flowchart for describing processing of controlling a short-range drone according to the first embodiment.
FIG. 6 is a flowchart for describing processing of controlling a long-range drone according to the first embodiment.
FIG. 7A is a view illustrating a flight example of the long-range drone before a tracking mark is fired.
FIG. 7B is a view illustrating a flight example of the long-range drone after the tracking mark is attached to a suspicious object.
FIG. 8 is a view schematically illustrating an example of a computer hardware configuration that functions as a moving object control device.
FIG. 9 is a view schematically illustrating a tracking robot according to a second embodiment.
FIG. 10 is a block diagram schematically illustrating a control device of a short-range drone.
FIG. 11 is a flowchart for describing processing executed by a microcomputer of the short-range drone according to the second embodiment.
FIG. 12A is a view illustrating a flight example of a long-range drone before a tracking mark is fired.
FIG. 12B is a view illustrating a flight example of the long-range drone after the tracking mark is attached to a suspicious object.
FIG. 12C is a view illustrating a flight example of the long-range drone after the tracking mark is attached to the suspicious object.
FIG. 13 is a view schematically illustrating a tracking robot according to a third embodiment.
FIG. 14 is a flowchart for describing traveling switching processing according to the third embodiment.
FIG. 15 is a view schematically illustrating a tracking robot according to a fourth embodiment.
FIG. 16 is a rear view of when the tracking robot according to the fourth embodiment is viewed from a rear side.
FIG. 17 is a functional block diagram schematically illustrating a control device of the tracking robot according to the fourth embodiment.
FIG. 18 is a view illustrating an example of movement information.
FIG. 19 is a flowchart illustrating a control processing procedure of a robot main body executed by the control device.
FIG. 20 is a view for schematically describing a tracking robot according to a fifth embodiment. Description of Embodiments

Hereinafter, although the present invention will be described through embodiments, the following embodiments do not limit the invention according to the claims. In addition, not all combinations of features described in the embodiments are essential to the solution of the invention.

### (First embodiment)

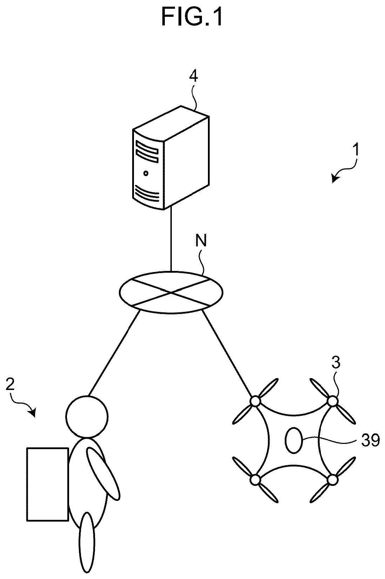

A tracking system 1 according to the first embodiment will be described with reference to FIG. 1. FIG. 1 is a view schematically illustrating the tracking system 1 according to the first embodiment.

The tracking system 1 includes a tracking robot 2, a long-range drone 3, and a management device 4. The tracking robot 2 and the long-range drone 3 are connected to the management device 4 via a network N. For example, a plurality of the tracking robots 2 and a plurality of the long-range drones 3 are provided.

The network N is, for example, a mobile communication network such as long term evolution (LTE) or 5G. The tracking robot 2 and the long-range drone 3 may be connected via the network N.

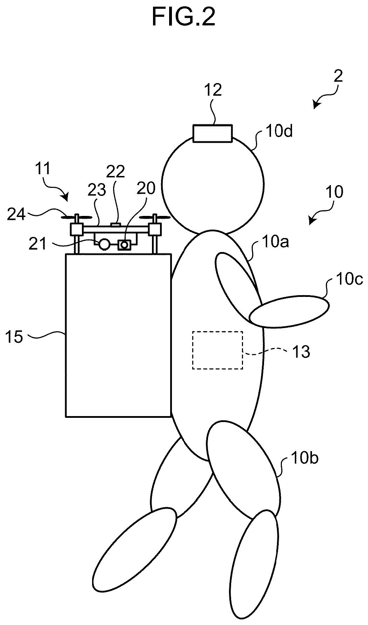

Next, the tracking robot 2 will be described with reference to FIG. 2. FIG. 2 is a view schematically illustrating the tracking robot 2 according to the first embodiment.

The tracking robot 2 includes a robot main body 10, a short-range drone 11, a detection unit 12, and a control device 13. The tracking robot 2 is capable of traveling autonomously, and tracks a suspicious object in a case where the suspicious object is detected. The suspicious object includes, for example, a person making a suspicious behavior, a criminal of a case, and the like. In addition, the suspicious object is not limited to a person, and may be a vehicle on which a person who has performed a suspicious behavior rides.

The robot main body 10 is, for example, a humanoid robot. The robot main body 10 includes a body portion 10a, a leg portion 10b, an arm portion 10c, and a head 10d. The leg portion 10b, the arm portion 10c, and the head 10d are movably attached to the body portion 10a. Note that the robot main body 10 is not limited to the humanoid robot. The robot main body 10 is provided with a driving mechanism such as a motor that moves each of the portions such as the leg portion 10b, the arm portion 10c, and the head 10d. The robot main body 10 can travel by the movement of the leg portion 10b.

On a back surface of the body portion 10a, a base portion 15 where the short-range drone 11 is capable of arriving and departing is provided. The base portion 15 includes a charging device that charges a battery of the short-range drone 11. In addition, the base portion 15 may include a replacement battery of the short-range drone 11.

The short-range drone 11 is an example of a moving object. The short-range drone 11 is a multicopter including an airframe 23 capable of flying autonomously and a plurality of (for example, four) rotary wing propellers 24, and performs autonomous flight in an unmanned manner. In addition, the short-range drone 11 is driven by a battery.

The short-range drone 11 includes a camera 20 and a tracking mark 21. The tracking mark 21 is fired from the short-range drone 11. The short-range drone 11 includes a firing device that fires the tracking mark 21.

For example, in a case of being fired on a suspicious object, the tracking mark 21 is attached to the suspicious object. For example, the tracking mark 21 is provided with a magnet. For example, in a case where the suspicious object is a vehicle, the tracking mark 21 is attached to the suspicious object by magnetic force. The tracking mark 21 may have adhesiveness.

The tracking mark 21 includes, for example, a positioning device. The positioning device is, for example, a global navigation satellite system (GNSS), and can receive radio waves from a navigation satellite orbiting in the sky and perform positioning and clocking. Furthermore, the positioning device includes a communication module that transmits detected position information of the self. The position information of the tracking mark 21 which information is detected by the positioning device is transmitted to the management device 4 via the network N. The position information of the tracking mark 21 which information is detected by the positioning device is transmitted to the control device 13 via the network N. In a case where the tracking mark 21 is attached to the suspicious object, a position of the suspicious object is detected based on the position information transmitted from the positioning device.

In addition, the tracking mark 21 may be a ball or the like including a fluorescent paint. The ball including the fluorescent paint bursts by hitting the suspicious object, and the fluorescent paint is attached to the suspicious object. The short-range drone 11 may include a plurality of types of the tracking marks 21.

In such a manner, the short-range drone 11 is capable of firing the tracking mark 21 toward the suspicious object. As a result, the tracking robot 2 can track the suspicious object by tracking the tracking mark 21. Thus, the tracking robot 2 can easily discriminate the suspicious object, can easily track the suspicious object, and can accurately discriminate the suspicious object. Thus, the tracking robot 2 can improve trackability for the suspicious object.

The short-range drone 11 includes a communication module to perform wireless communication via the network N. In addition, the short-range drone 11 includes various sensors such as an acceleration sensor, a gyro sensor, and an optical sensor.

In addition, the short-range drone 11 includes a positioning device 22 to measure its own position. The positioning device 22 is, for example, a GNSS. Position information of the short-range drone 11 which information is detected by the positioning device 22 is transmitted to the management device 4 via the network N. The position information of the short-range drone 11 which information is detected by the positioning device 22 may be transmitted to the control device 13 via the network N. In addition, the short-range drone 11 includes a computer (such as a microcomputer) that executes a flight control function, an attitude control function for controlling an attitude, and the like.

The short-range drone 11 acquires information relating to a first flight path from the control device 13 via the communication module. The information relating to the first flight path includes position information (such as latitude, longitude, and altitude) of the first flight path. The first flight path is a flight path that tracks the suspicious object.

The short-range drone 11 transmits an image captured by the camera 20 to the management device 4 via the communication module. The short-range drone 11 transmits the image captured by the camera 20 to the control device 13 via the communication module. The short-range drone 11 acquires information relating to a firing signal of the tracking mark 21 from the control device 13 via the communication module.

In a case where the suspicious object is detected, the short-range drone 11 departs from the base portion 15 of the robot main body 10. The short-range drone 11 acquires information relating to the first flight path and flies along the first flight path so as to track the suspicious object. The short-range drone 11 executes image processing based on the image captured by the camera 20, and flies along the first flight path while avoiding obstacles. The short-range drone 11 fires the tracking mark 21 in a case where the firing signal of the tracking mark 21 is acquired. The short-range drone 11 fires the tracking mark 21 to the suspicious object.

The detection unit 12 is provided, for example, in the head 10d of the robot main body 10. The detection unit 12 may be provided in the body portion 10a of the robot main body 10, or the like. The detection unit 12 detects a situation around the robot main body 10. The detection unit 12 includes, for example, a high-sensitivity camera, light detection and ranging (LiDAR), a thermal camera, a radar, and the like capable of sensing 360 degrees. The detection unit 12 may include sensors of vision recognition, small sound, ultrasonic waves, vibration, infrared rays, ultraviolet rays, and electromagnetic waves, for example. A plurality of the detection units 12 may be provided. The detection unit 12 may be a plurality of types of sensors, or the like.

In addition, the detection unit 12 includes a positioning device. The positioning device is, for example, a GNSS. The positioning device detects a position of the robot main body 10. The detected position information of the robot main body 10 is transmitted to the management device 4 via the network N.

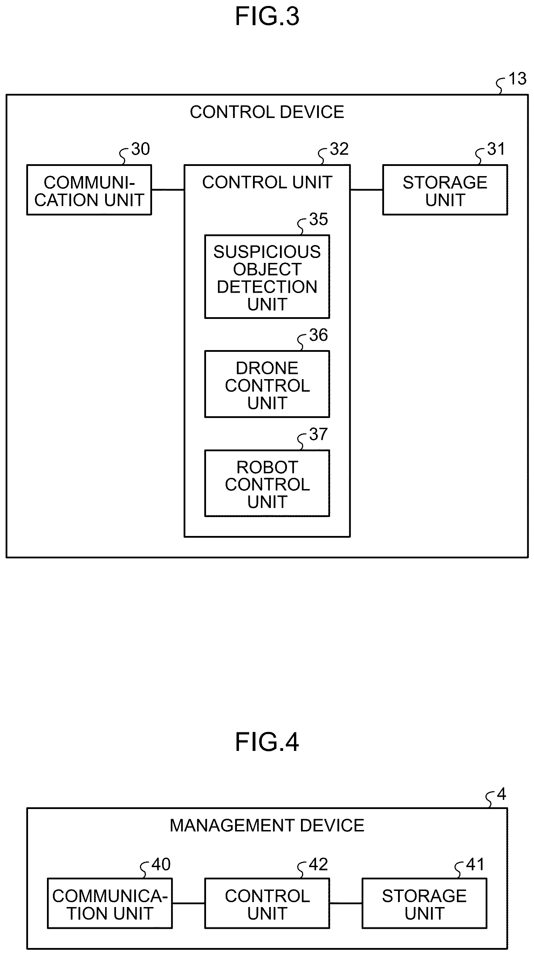

As illustrated in FIG. 3, the control device 13 includes a communication unit 30, a storage unit 31, and a control unit 32. FIG. 3 is a functional block diagram schematically illustrating the control device 13 of the tracking robot 2 according to the first embodiment.

The communication unit 30 is wirelessly connected to the network N. The communication unit 30 transmits and receives information to and from the management device 4 via the network N. The communication unit 30 transmits various kinds of information detected by the detection unit 12 to the management device 4. The communication unit 30 receives the image captured by the camera 20 of the short-range drone 11. The communication unit 30 receives the position information of the tracking mark 21 from the positioning device of the tracking mark 21.

The storage unit 31 is realized by, for example, a semiconductor memory element such as a random access memory (RAM) or a flash memory, or a storage device such as a hard disk drive (HDD), a solid state drive (SSD), or an optical disk. The storage unit 31 stores various programs, various kinds of data, and the like.

The control unit 32 is a controller, and includes, for example, a microcomputer including a central processing unit (CPU), a read only memory (ROM), a RAM, an input/output port, and the like, and various circuits. Furthermore, the control unit 32 may include, for example, hardware such as an integrated circuit such as an application specific integrated circuit (ASIC) or a field programmable gate array (FPGA). The control unit 32 includes a suspicious object detection unit 35, a drone control unit 36, and a robot control unit 37.

The suspicious object detection unit 35 detects the suspicious object. The suspicious object detection unit 35 detects the suspicious object based on various kinds of information detected by the detection unit 12. For example, the suspicious object detection unit 35 executes predetermined image processing on the image captured by the high-sensitivity camera provided in the tracking robot 2, and detects the suspicious object. For example, the suspicious object detection unit 35 may detect the suspicious object depending on a detection result by the infrared sensor. The suspicious object detection unit 35 may detect the suspicious object by using a suspicious object detection model in artificial intelligence (AI).

The drone control unit 36 controls the short-range drone 11 and the long-range drone 3. The drone control unit 36 sets the first flight path of the short-range drone 11. The drone control unit 36 sets the first flight path that tracks the detected suspicious object. The drone control unit 36 sets the first flight path based on the current position information of the tracking robot 2 and the position information where the suspicious object is detected. For example, the drone control unit 36 sets the first flight path based on the current position information of the tracking robot 2, a direction in which the suspicious object is detected with respect to the tracking robot 2, and a distance from the tracking robot 2 to the suspicious object.

The drone control unit 36 sets a second flight path of the long-range drone 3. The drone control unit 36 sets the second flight path that tracks the detected suspicious object. The drone control unit 36 sets the second flight path based on position information of a station where the long-range drone 3 is on standby and the position information of the tracking mark 21. The drone control unit 36 may set the second flight path based on the position information of the long-range drone 3, and the position information of the tracking mark 21.

The drone control unit 36 may set the first flight path and the second flight path based on a predicted escape path of the suspicious object. The predicted escape path is generated by, for example, an escape path prediction model. The escape path prediction model predicts the escape path of the suspicious object from the position information of the tracking robot 2 of when the suspicious object is detected, the position information of the tracking mark 21, map information, traffic information, and the like. The position information of the tracking mark 21, such as history information of the position of the tracking mark 21 is included.

For example, the escape path prediction model is a text generation model (so-called AI chat engine), and may be interpreted as an algorithm and an operation for automated dialogue processing with characters. Since the text generation model is known as disclosed in, for example, Japanese Patent Application Publication No. 2018-081444 and chatGPT (Internet search <URL: https://openai.com/blog/chatgpt>), a detailed description thereof will be omitted. Such a text generation model is configured by a large language model (LLM).

For example, based on the position information of the tracking mark 21, the drone control unit 36 generates a sentence such as "A suspicious object is escaping from the east to the west at an intersection of DD in ABC town. What kind of escape path can be considered?" by the language generation model. Then, the generated sentence is input to the escape path prediction model, whereby a sentence such as "There is a high possibility that a suspicious person will head to EF in ABC town." is generated, for example. In this case, the drone control unit 36 sets a first flight path and a second flight path toward "EF in ABC town".

Since the first flight path and the second flight path are set based on the predicted escape path of the suspicious object, the short-range drone 11 and the long-range drone 3 can move ahead to a destination of the suspicious object. Note that the predicted escape path may be set by the management device 4.

The set first flight path is transmitted to the short-range drone 11. The short-range drone 11 that receives the first flight path departs from the base portion 15, flies along the first flight path, and tracks the suspicious object.

The set second flight path is transmitted to the long-range drone 3. The long-range drone 3 that receives the second flight path departs from the standby station, flies along the second flight path, and tracks the suspicious object.

The drone control unit 36 generates a firing signal of the tracking mark 21 of the short-range drone 11. For example, the drone control unit 36 calculates a distance to the suspicious object from the image captured by the camera 20 of the short-range drone 11. Then, in a case where the distance to the suspicious object is equal to or shorter than a predetermined distance set in advance, the firing signal for firing the tracking mark 21 toward the suspicious object is generated. The generated firing signal is transmitted to the short-range drone 11. As a result, the tracking mark 21 is fired toward the suspicious object.

The robot control unit 37 sets a traveling path of the robot main body 10. The traveling path includes a preset warning path. The robot control unit 37 causes the robot main body 10 to travel autonomously along the traveling path. The robot control unit 37 causes the robot main body 10 to travel autonomously depending on a situation detected by the detection unit 12. The robot control unit 37 causes the robot main body 10 to travel autonomously by controlling driving of the leg portion 10b and the arm portion 10c of the robot main body 10. The robot control unit 37 controls driving of the leg portion 10b and the arm portion 10c of the robot main body 10 in such a manner that, for example, the robot main body 10 travels while avoiding obstacles based on various kinds of information detected by the detection unit 12.

Furthermore, for example, in a case where the suspicious object is detected, the robot control unit 37 sets the traveling path so as to track the suspicious object. The robot control unit 37 sets the traveling path so as to track the suspicious object based on the position information of the robot main body 10 and the position information where the suspicious object is detected. For example, the robot control unit 37 sets the traveling path of tracking the suspicious object based on the current position information of the robot main body 10, the direction in which the suspicious object is detected with respect to the robot main body 10, and the distance from the robot main body 10 to the suspicious object.

In addition, after the short-range drone 11 departs, the robot control unit 37 sets the traveling path so as to track the suspicious object based on the position information of the robot main body 10 and the position information of the tracking mark 21.

In a case where the suspicious object is detected, the robot control unit 37 may set the traveling path so as to track the suspicious object based on the predicted escape path of the suspicious object. Since the traveling path of the robot main body 10 is set based on the predicted escape path of the suspicious object, the robot main body 10 can move ahead to the destination of the suspicious object.

Returning to FIG. 1, the long-range drone 3 is an example of the moving object. The long-range drone 3 is a multicopter including a plurality of rotary wing propellers, and performs autonomous flight in an unmanned manner similarly to the short-range drone 11. In addition, the short-range drone 11 is driven by a battery.

The long-range drone 3 has a longer flight distance than the short-range drone 11. The flight distance is a distance where it is capable of flying by one charge. The long-range drone 3 stands by at a preset station. For example, the long-range drone 3 includes a large battery in order to have a longer flight distance than the short-range drone 11. For example, the long-range drone 3 is larger than the short-range drone 11. The long-range drone 3 may be, for example, an airplane type.

Similarly to the short-range drone 11, the long-range drone 3 includes a camera. Unlike the short-range drone 11, for example, the long-range drone 3 does not include a tracking mark. Note that the long-range drone 3 may include a tracking mark similarly to the short-range drone 11.

The long-range drone 3 includes a communication module to perform wireless communication via the network N. In addition, the long-range drone 3 includes various sensors such as an acceleration sensor, gyroscope sensor, and optical sensor.

In addition, the long-range drone 3 includes a positioning device 39 to measure its own position (see FIG. 1). The positioning device 39 is, for example, a GNSS. Position information of the long-range drone 3 which information is detected by the positioning device 39 may be transmitted to the management device 4 via the network N. The position information of the long-range drone 3 which information is detected by the positioning device 39 may be transmitted to the control device 13 via the network N. In addition, the long-range drone 3 includes a computer (such as a microcomputer) that executes a flight control function, an attitude control function for controlling an attitude, and the like.

The long-range drone 3 acquires information relating to the second flight path from the control device 13 via the communication module. The information relating to the second flight path includes position information (such as latitude, longitude, and altitude) of the second flight path.

The long-range drone 3 may fly so as to take over the tracking of the suspicious object by the short-range drone 11. Simultaneously with the short-range drone 11, the long-range drone 3 may track the suspicious object.

The long-range drone 3 transmits an image captured by the camera to the management device 4 via the communication module. The long-range drone 3 transmits the image captured by the camera to the control device 13 via the communication module.

In a case where the suspicious object is detected, the long-range drone 3 departs from the standby station. The long-range drone 3 acquires the information relating to the second flight path and flies along the second flight path so as to track the suspicious object. The long-range drone 3 executes image processing based on the image captured by the camera, and flies along the second flight path while avoiding obstacles.

By tracking the suspicious object by using the short-range drone 11 and the long-range drone 3, it is possible to improve trackability for the suspicious object. For example, tracking can be performed inside by the short-range drone 11 smaller than the long-range drone 3, and tracking can be performed by the long-range drone 3 when the suspicious object escapes to the outside.

The management device 4 is, for example, a server device. The management device 4 may be a cloud server. As illustrated in FIG. 4, the management device 4 includes a communication unit 40, a storage unit 41, and a control unit 42. FIG. 4 is a functional block diagram schematically illustrating the management device 4 according to the first embodiment.

The management device 4 collects the various kinds of information detected by the detection unit 12 of the tracking robot 2 from the tracking robot 2 that detects the suspicious object. From a tracking robot 2 different from the tracking robot 2 that detects the suspicious object, the management device 4 collects various kinds of information detected by a detection unit 12. In addition, the management device 4 collects position information and the like of each long-range drone 3 from a plurality of the long-range drones 3.

The management device 4 may generate information relating to the traveling path of the tracking robot 2. In addition, the management device 4 may generate the information relating to the first flight path of the short-range drone 11. In addition, the management device 4 may generate the information relating to the second flight path of the long-range drone 3.

The communication unit 40 is connected to the network N in a wired or wireless manner. The communication unit 40 transmits and receives information to and from the control device 13 of the tracking robot 2, the short-range drone 11, and the long-range drone 3 via the network N.

The communication unit 40 receives the various kinds of information detected by the detection unit 12 from the control device 13 of the tracking robot 2. The communication unit 40 receives the image captured by the camera 20 from the short-range drone 11. The communication unit 40 receives the position information from the short-range drone 11, the tracking mark 21, and the long-range drone 3. The communication unit 40 receives the image captured by the camera from the long-range drone 3.

The storage unit 41 is realized by, for example, a semiconductor memory element such as a RAM or a flash memory, or a storage device such as an HDD, an SSD, or an optical disk. The storage unit 41 stores various programs, various kinds of data, and the like. For example, the storage unit 41 stores the various kinds of information detected by the detection unit 12 of each tracking robot 2.

The control unit 42 is a controller, and includes, for example, a microcomputer including a CPU, a ROM, a RAM, an input/output port, and the like, and various circuits. Furthermore, the control unit 42 may include, for example, hardware such as an integrated circuit such as an ASIC or an FPGA.

The control unit 42 may generate information relating to the traveling path of the robot main body 10. For example, the control unit 42 generates the information relating to the traveling path of the robot main body 10 by using a text generation model (so-called AI chat engine). As described above, the text generation model may be interpreted as an algorithm and an operation for automated dialogue processing with characters.

The control unit 42 generates a question about the suspicious object from the various kinds of information detected by the detection unit 12 of the tracking robot 2. First, the control unit 42 generates a question by using a language generation model, for example.

For example, in a case where a motion is detected by the infrared sensor of the tracking robot 2, a question such as "The infrared sensor has detected a motion. Is it a suspicious person who makes such a motion? What kind of action will be made next in terms of criminal psychology?" is made.

When such a question is input to the text generation model, for example, the control unit 42 generates a sentence such as "There is a high possibility of a suspicious person. Escaping action will be made when a sign of a person is felt". When the generated sentence is transmitted to the tracking robot 2 as the information relating to the traveling path, the tracking robot 2 sets the traveling path so as to approach the person estimated to be the suspicious person at a low speed.

Furthermore, for example, in a case where a sound is detected by a sensor that detects small sound of the tracking robot 2, a question such as "A sound of a beep is heard from 2 meters ahead. What is this sound?" is generated.

When such a question is input to the text generation model, for example, the control unit 42 generates a sentence such as "A warning sound is made". When the generated sentence is transmitted to the tracking robot 2 as the information relating to the traveling path, the tracking robot 2 recognizes the suspicious object, and sets the traveling path so as to approach the suspicious object in the shortest path, for example.

Note that the control unit 42 may similarly generate the information relating to the traveling path of the tracking robot 2 based on the other information detected by the detection unit 12 of the tracking robot 2. The control unit 42 may generate the information relating to the traveling path of the tracking robot 2 based on information acquired by a high-sensitivity camera, LiDAR, a thermal camera, a radar, and the like capable of sensing 360 degrees. The control unit 42 may generate the information relating to the traveling path of the tracking robot 2 based on information acquired by sensors of vision recognition, ultrasonic waves, vibration, ultraviolet rays, and electromagnetic waves, for example.

Similarly, the information relating to the traveling path of the tracking robot 2 may be generated based on the plurality of pieces of information detected by the detection unit 12 of the tracking robot 2. Note that the control unit 42 may set the traveling path of the tracking robot 2.

Since the information relating to the traveling path of the tracking robot 2 is generated by a document generation model, the tracking robot 2 can accurately determine the suspicious object, for example. In addition, it is possible to bring the tracking robot 2 close to the suspicious object without being noticed by the suspicious object. Thus, for example, the tracking robot 2 can improve a hit rate of the tracking mark 21 fired from the short-range drone 11. As described above, the information relating to the traveling path of the tracking robot 2 is generated by the document generation model, whereby the trackability for the suspicious object by the tracking robot 2 or the like can be improved.

Furthermore, the control unit 42 may generate the information relating to at least one of the first flight path of the short-range drone 11 and the second flight path of the long-range drone 3. For example, the control unit 42 generates the information relating to the first flight path by the text generation model.

For example, in a case where a suspicious object is detected by the tracking robot 2, the suspicious object is a vehicle, and "AA-BB" is detected as a number of the suspicious object vehicle, the control unit 42 creates a sentence "Capture an image of a vehicle having a number AA-BB" by using the language generation model. Then, the control unit 42 generates the information relating to the first flight path by inputting the generated sentence to the text generation model. For example, the control unit 42 captures an image of the vehicle with the number "AA-BB" by the camera 20 of the short-range drone 11, and generates a flight program of the short-range drone 11 in which program the vehicle with the number "AA-BB" is tracked. Then, the generated flight program is generated as the information relating to the first flight path. The generated information relating to the first flight path is transmitted to the short-range drone 11, whereby the short-range drone 11 flies so as to track the vehicle with the number "AA-BB". The image captured by the camera 20 of the short-range drone 11 is transmitted to the management device 4.

For example, by generating the information relating to the first flight path of the short-range drone 11 by the document generation model, it is possible to improve the trackability for the suspicious object by the short-range drone 11.

The generation of the information relating to the traveling path of the tracking robot 2 by the text generation model may be executed by the tracking robot 2.

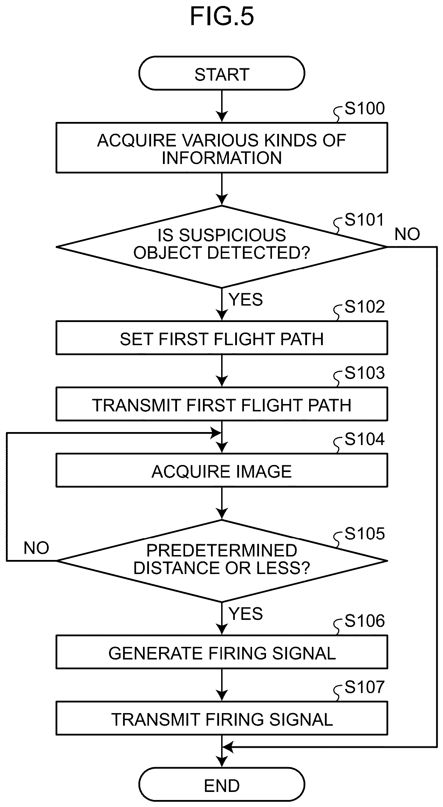

Next, control processing of the short-range drone 11 according to the embodiment will be described with reference to FIG. 5. FIG. 5 is a flowchart for describing the control processing of the short-range drone 11 according to the first embodiment. The control processing of the short-range drone 11 is executed by the control device 13 of the tracking robot 2.

The control unit 32 acquires various kinds of information detected by the detection unit 12 (S100). The control unit 32 determines whether a suspicious object is detected based on the acquired various kinds of information (S101). For example, the control unit 32 detects the suspicious object by executing predetermined image processing on an image captured by the high-sensitivity camera.

In a case where the suspicious object is not detected (S101: No), the control unit 32 ends the current processing. In a case where the suspicious object is detected (S101: Yes), the control unit 32 sets the first flight path of the short-range drone 11 (S102).

The control unit 32 transmits the first flight path to the short-range drone 11 (S103). As a result, the short-range drone 11 departs from the base portion 15 of the tracking robot 2.

The control unit 32 acquires an image captured by the camera 20 of the short-range drone 11 (S104).

The control unit 32 determines whether the distance to the suspicious object is equal to or shorter than a predetermined distance (S105). In a case where the distance to the suspicious object is longer than the predetermined distance (S105: No), the control unit 32 continues the tracking of the suspicious object and acquires the image captured by the camera 20 of the short-range drone 11 (S104).

In a case where the distance to the suspicious object is equal to or shorter than the predetermined distance (S105: Yes), the control unit 32 generates a firing signal of the tracking mark 21 (S106). The control unit 32 transmits the generated firing signal to the short-range drone 11 (S107). As a result, the tracking mark 21 is fired from the short-range drone 11 toward the suspicious object.

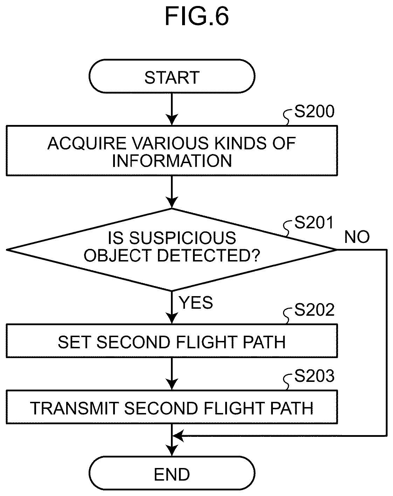

Next, control processing of the long-range drone 3 according to the embodiment will be described with reference to FIG. 6. FIG. 6 is a flowchart for describing the control processing of the long-range drone 3 according to the first embodiment. The control processing of the long-range drone 3 is executed by the control device 13 of the tracking robot 2.

The control unit 32 acquires various kinds of information detected by the detection unit 12 (S200). The control unit 32 determines whether a suspicious object is detected based on the acquired various kinds of information (S201).

In a case where the suspicious object is not detected (S201: No), the control unit 32 ends the current processing. In a case where the suspicious object is detected (S201: Yes), the control unit 32 sets the second flight path of the long-range drone 3 (S202).

The control unit 32 transmits the second flight path to the short-range drone 11 (S203). As a result, the long-range drone 3 departs from the station.

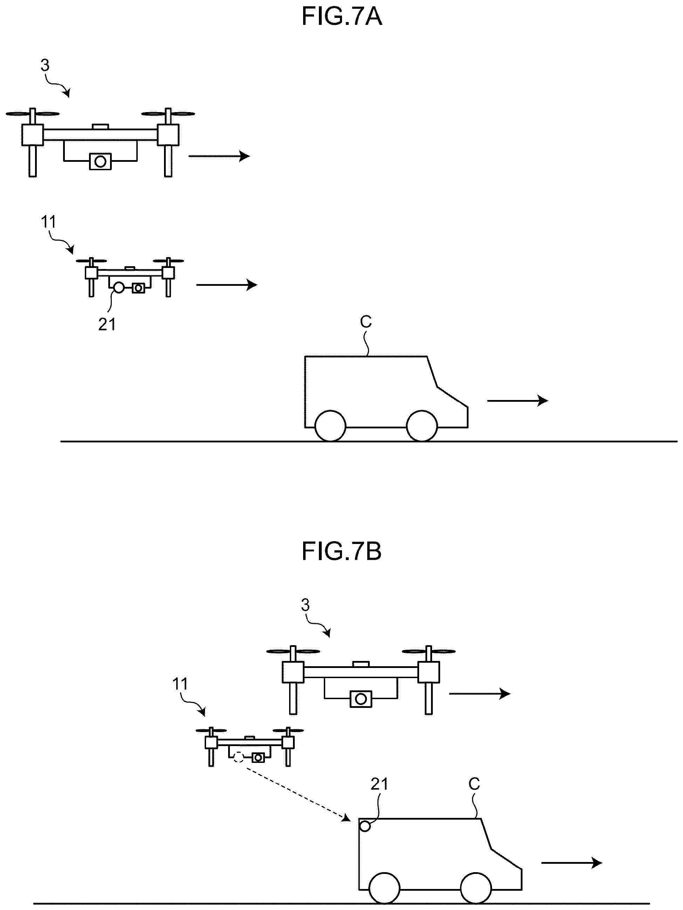

The long-range drone 3 flies based on the position information of the tracking mark 21. Thus, as illustrated in FIG. 7A, in a case where the short-range drone 11 does not fire the tracking mark 21 at a suspicious object C, the long-range drone 3 tracks the short-range drone 11 and flies so as to approach the suspicious object C. Then, as illustrated in FIG. 7B, when the tracking mark 21 is fired from the short-range drone 11 and the tracking mark 21 is attached to the suspicious object C, the long-range drone 3 flies so as to track the suspicious object C. FIG. 7A is a view illustrating a flight example of the long-range drone 3 before the tracking mark 21 is fired. FIG. 7B is a view illustrating a flight example of the long-range drone 3 after the tracking mark 21 is attached to the suspicious object C.

Note that the camera that captures the image for detecting and tracking the suspicious object is not limited to the camera provided in the tracking robot 2 or the like. As the camera that captures the image for detecting and tracking the suspicious object, for example, in a case where the suspicious object is in a room, a camera of another robot in the room or a monitoring camera provided in the room may be used. In addition, as the camera that captures the image for detecting and tracking the suspicious object, for example, in a case where the suspicious object is outside, an outdoor monitoring camera may be used. That is, for example, the tracking robot 2 may detect the suspicious object based on images captured by the camera of the other robot in the room, the monitoring camera in the room, and the outdoor monitoring camera.

The tracking robot 2 includes the short-range drone 11, the robot main body 10, the detection unit 12, and the control unit 32. The short-range drone 11 is capable of tracking the suspicious object and firing the tracking mark 21 toward the suspicious object. The robot main body 10 is capable of traveling autonomously where the short-range drone 11 is capable of arriving and departing. The detection unit 12 detects a situation around the robot main body 10. The control unit 32 controls the drone, and causes the robot main body 10 to travel autonomously depending on the situation detected by the detection unit 12. In a case where the suspicious object is detected, the control unit 32 causes the short-range drone 11 to depart from the robot main body 10, and fires the tracking mark 21 from the short-range drone 11 toward the suspicious object.

As a result, the tracking robot 2 can track the suspicious object by tracking the tracking mark 21. Thus, the tracking robot 2 can easily discriminate the suspicious object, can easily track the suspicious object, and can accurately discriminate the suspicious object. Thus, the tracking robot 2 can improve trackability for the suspicious object.

The tracking mark 21 acquires position information of the tracking mark 21 and transmits the position information of the tracking mark 21.

As a result, the tracking robot 2 can track the suspicious object based on the position information of the tracking mark 21. For example, even in a case of losing sight of the suspicious object due to an obstacle or the like, the tracking robot 2 can discover the suspicious object based on the position information of the tracking mark 21, and can improve the trackability for the suspicious object.

The position information of the tracking mark 21 is transmitted to the long-range drone 3 having the longer flight distance than the short-range drone 11. The long-range drone 3 flies so as to track the suspicious object based on the position information of the tracking mark 21.

As a result, the long-range drone 3 can continuously track the suspicious object for a long time.

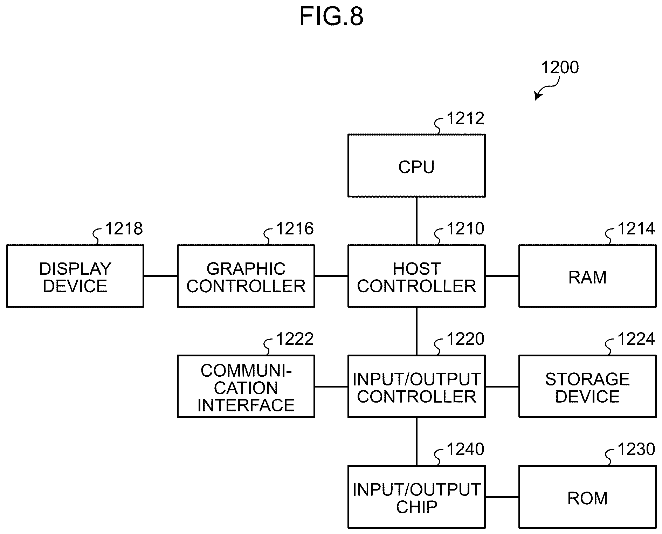

FIG. 8 is a view schematically illustrating an example of a computer hardware configuration that functions as the tracking robot 2 or the management device 4. Programs installed in a computer 1200 can cause the computer 1200 to function as one or a plurality of "units" of the device according to the present embodiment, or cause the computer 1200 to execute an operation associated with the device according to the present embodiment or the one or plurality of "units", and/or cause the computer 1200 to execute a process according to the present embodiment or a stage of the process. Such programs may be executed by a CPU 1212 to cause the computer 1200 to execute a certain operation associated with a part or all of the flowcharts and blocks in the block diagrams described in the present specification.

The computer 1200 according to the present embodiment includes the CPU 1212, a RAM 1214, and a graphic controller 1216 which are mutually connected by a host controller 1210. The computer 1200 also includes input/output units such as a communication interface 1222, a storage device 1224, a DVD drive, and an IC card drive which are connected to the host controller 1210 via an input/output controller 1220. The DVD drive may be a DVD-ROM drive, a DVD-RAM drive, and the like. The storage device 1224 may be a hard disk drive, a solid state drive, and the like. The computer 1200 also includes input/output units such as a ROM 1230 and a keyboard which are connected to the input/output controller 1220 via an input/output chip 1240.

The CPU 1212 operates according to programs stored in the ROM 1230 and the RAM 1214, and controls each unit. The graphic controller 1216 acquires image data generated by the CPU 1212 in a frame buffer or the like provided in the RAM 1214 or itself, and causes the image data to be displayed on a display device 1218.

The communication interface 1222 communicates with other electronic devices via the network. The storage device 1224 stores programs and data used by the CPU 1212 in the computer 1200. The DVD drive reads a program or data from a DVD-ROM or the like and provides it/them to the storage device 1224. The IC card drive reads a program and data from an IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The programs are provided by a computer-readable storage medium such as the DVD-ROM or the IC card. The programs are read from the computer-readable storage medium, installed in the storage device 1224, the RAM 1214, or the ROM 1230 which is also an example of the computer-readable storage medium, and executed by the CPU 1212. Information processing described in these programs is read by the computer 1200 and provides cooperation between the programs and the various types of hardware resources. The device or method may be configured by realization of an operation or processing of information according to a use of the computer 1200.

For example, in a case where communication is executed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer region provided in a recording medium such as the RAM 1214, the storage device 1224, the DVD-ROM, or the IC card, transmits the read transmission data to the network, or writes reception data received from the network to a reception buffer region or the like provided on the recording medium.

In addition, the CPU 1212 may make it possible for the RAM 1214 to read all or a necessary portion of a file or database stored in the external recording medium such as the storage device 1224, the DVD drive (DVD-ROM), the IC card, or the like, and may execute various types of processing on data on the RAM 1214. Then, the CPU 1212 may write back the processed data to the external recording medium.

Various types of information such as various types of programs, data, tables, and databases may be stored in the recording medium and subjected to information processing. The CPU 1212 may execute, on the data read from the RAM 1214, various types of processing including various types of operations, information processing, condition determination, conditional branching, unconditional branching, information retrieval/replacement, and the like which are described throughout the present disclosure and specified by an instruction sequence of the programs, and may write back results to the RAM 1214. In addition, the CPU 1212 may retrieve information in the file, the database, or the like in the recording medium. For example, in a case where a plurality of entries each of which has an attribute value of a first attribute associated with an attribute value of a second attribute is stored in the recording medium, the CPU 1212 may retrieve an entry in which the attribute value of the first attribute matches a specified condition from the plurality of entries, read the attribute value of the second attribute stored in the entry, and acquire the attribute value of the second attribute associated with the first attribute satisfying a predetermined condition.

The above-described programs or software modules may be stored in a computer-readable storage medium on the computer 1200 or in a vicinity of the computer 1200. Furthermore, a recording medium such as a hard disk or a RAM provided in a server system connected to a dedicated communication network or the Internet is capable of being used as a computer-readable storage medium, whereby the programs are provided to the computer 1200 via the network.

The blocks in the flowcharts and block diagrams in the present embodiment may represent stages of a process in which an operation is performed or "units" of the device having a role of executing the operation. Certain stages and "units" may be realized by a dedicated circuit, a programmable circuit provided together with a computer-readable instruction stored on the computer-readable storage medium, and/or a processor provided together with the computer-readable instruction stored on the computer-readable storage medium. The dedicated circuit may include a digital and/or analog hardware circuit, and may include an integrated circuit (IC) and/or discrete circuit. The programmable circuit may include a reconfigurable hardware circuit including, for example, logical conjunction, logical disjunction, exclusive disjunction, NAND, NOR, other logical operation, a flip-flop, a register, and a memory element, such as a field programmable gate array (FPGA) and a programmable logic array (PLA).

The computer-readable storage medium may include any tangible device capable of storing an instruction executed by a suitable device, and the computer-readable storage medium having the instruction stored therein includes a product including an instruction that may be executed to create a means to execute an operation specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include any of an assembler instruction, an instruction-set-architecture (ISA) instruction, a machine instruction, a machine-dependent instruction, a microcode, a firmware instruction, state-setting data, or a source code or an object code written in any combination of one or a plurality of programming languages including an object oriented programming language such as Smalltalk (registered trademark), JAVA (registered trademark), and C++, and a conventional procedural programming language such as the "C" programming language or a similar programming language.

The computer-readable instruction may be provided to a processor or a programmable circuit of a general purpose computer, special purpose computer, or other programmable data processing device either locally or via a wide area network (WAN) such as a local area network (LAN), the Internet, or the like in such a manner that the processor or programmable circuit of the general purpose computer, special purpose computer, or other programmable data processing device executes the computer-readable instruction to generate a means to execute the operation specified in the flowcharts or block diagrams. Examples of the processor include a computer processor, a processing unit, a microprocessor, a digital signal processor, a controller, a microcontroller, and the like.

### (Second embodiment)

Here, portions different from those of the first embodiment will be mainly described, and description of configurations, processing, and the like similar to those of the first embodiment will be omitted.

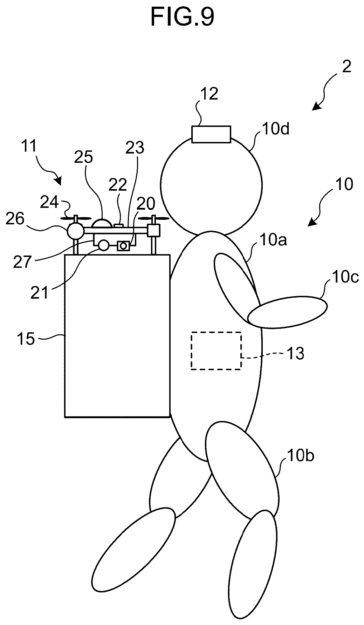

A tracking robot 2 will be described with reference to FIG. 9. FIG. 9 is a view schematically illustrating the tracking robot 2 according to the second embodiment.

A short-range drone 11 of the tracking robot 2 further includes a warning light 25, an alarm 26, and a control device 27. The warning light 25 is, for example, a red light that emits blinking light. The alarm 26 is, for example, a speaker that emits a siren sound or the like. The alarm 26 is capable of emitting, for example, a voice message that gives alert. The warning light 25 and the alarm 26 are controlled by the control device 27.

A microcomputer included in the short-range drone 11 has a function of recognizing a surrounding obstacle and a suspicious subject by image recognition processing based on an image captured by a camera 20. Furthermore, the microcomputer included in the short-range drone 11 performs light emission control of the warning light 25 and sound emission control of the alarm 26.

For example, based on position information of a tracking mark 21, a drone control unit 36 of a control device 13 uses a language generation model and generates a sentence such as "A suspicious object is escaping from the east to the west at an intersection of DD in ABC town. What kind of escape path is expected? ". Then, the generated sentence is input to an escape path prediction model, whereby a sentence such as "There is a high possibility that a suspicious person will head to EF in ABC town." is generated, for example. In this case, the drone control unit 36 goes to "EF in ABC town", and sets a first flight path and a second flight path that track the suspicious object and block an escape direction of the suspicious object.

Since the first flight path and the second flight path are set based on a predicted escape path of the suspicious object, the short-range drone 11 and a long-range drone 3 can move ahead to a destination of the suspicious object and block the escape direction of the suspicious object.

Furthermore, in a case where the suspicious object is detected while another drone is flying, the drone control unit 36 may be configured to set the first flight path and the second flight path to fly along a flight path that drives the suspicious object into a flight position of the other drone.

The other drone in this case is either the short-range drone 11 or the long-range drone 3. As a result, the drone control unit 36 can suppress the escape of the suspicious object by running the suspicious object down by the plurality of short-range drones 11 and long-range drones 3.

In addition, the drone control unit 36 may be configured to set the first flight path and the second flight path to fly along the flight path that drives the suspicious object into a dead end in a case where the suspicious object is detected. As a result, the drone control unit 36 can suppress the escape of the suspicious object by running down the suspicious object into the dead end by the short-range drone 11 and the long-range drone 3.

Furthermore, the drone control unit 36 may be configured to acquire a traveling position of a traveling police vehicle from the police. In this case, the drone control unit 36 acquires position information of the nearest police station, police box, and police branch station (for example, closest to the escaping suspicious object) from stored map information.

Then, the drone control unit 36 sets the first flight path and the second flight path to fly along a flight path that drives the suspicious object into the nearest police station, police box, police branch station, and the traveling position of the police vehicle traveling in the vicinity.

As a result, the drone control unit 36 can suppress the escape of the suspicious object by driving the suspicious object into the nearest police station, police box, police branch station, or the traveling position of the police vehicle traveling in the vicinity by the short-range drone 11 and the long-range drone 3.

Similarly to the short-range drone 11, the long-range drone 3 illustrated in FIG. 1 includes an airframe, a plurality of (for example, four) rotary wing propellers, a camera, a warning light, an alarm, and a control device. The camera, warning light, alarm, and control device included in the long-range drone 3 are respectively the same as the camera 20, the warning light 25, the alarm 26, and the control device 27 included in the short-range drone 11.

When detecting a suspicious object being tracked, the short-range drone 11 and the long-range drone 3 turn on (blink) the warning light 25 in such a manner that the suspicious object goes to a direction opposite to the direction toward the airframe 23. Furthermore, when detecting the suspicious object being tracked, the short-range drone 11 and the long-range drone 3 cause the alarm 26 to emit a warning sound (such as a siren sound) in such a manner that the suspicious object goes to the direction opposite to the direction toward the airframe 23.

As a result, the short-range drone 11 and the long-range drone 3 can guide the suspicious object to a place where the suspicious object cannot escape after preventing the suspicious object from moving ahead. For example, the short-range drone 11 and the long-range drone 3 can guide it to, for example, the flight position of the other drone, the dead end, the nearest police station, police box, police branch station, or the traveling position of the police vehicle traveling in the vicinity to run it down.

In addition, when detecting the suspicious object being tracked, for example, the short-range drone 11 and the long-range drone 3 cause the alarm 26 to alert neighboring residents to the suspicious object while tracking the suspicious object. For example, the short-range drone 11 and the long-range drone 3 cause the alarm 26 to emit a voice message such as "A suspicious object is escaping. Please do not get out of the house". As a result, the short-range drone 11 and the long-range drone 3 can protect safety of the neighboring residents.

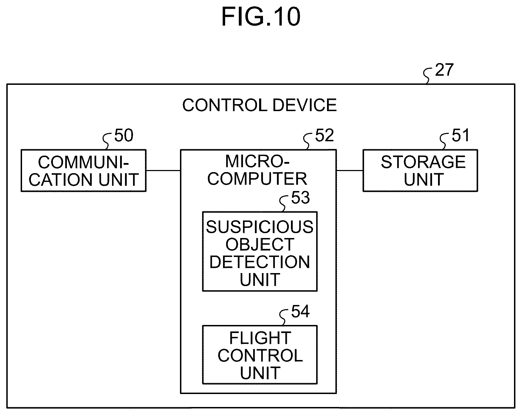

Next, the control device 27 of the short-range drone 11 will be described with reference to FIG. 10. FIG. 10 is a block diagram schematically illustrating the control device 27 of the short-range drone 11. Note that the control device of the long-range drone 3 has the same configuration as the control device 27 of the short-range drone 11 except that firing control of the tracking mark 21 is not performed. Thus, the overlapping description of the configuration of the control device of the long-range drone 3 is omitted here.

As illustrated in FIG. 10, the control device 27 includes a communication unit 50, a storage unit 51, and a microcomputer 52.

The communication unit 50 is wirelessly connected to the network N. The communication unit 50 transmits and receives information to and from the tracking robot 2 and the management device 4 via the network N. The communication unit 50 receives a firing signal of the tracking mark 21 and the first flight path from the tracking robot 2 or the management device 4. In a case of the long-range drone 3, the communication unit receives the second flight path from the tracking robot 2 or the management device 4.

Furthermore, the communication unit 50 transmits the image captured by the camera 20 and the position information of the short-range drone 11 to the tracking robot 2 and the management device 4. In a case of the long-range drone 3, the communication unit transmits the position information of the long-range drone 3 to the tracking robot 2 and the management device 4.

The storage unit 51 is realized by, for example, a semiconductor memory element such as a RAM or a flash memory, or a storage device such as an HDD, an SSD, or an optical disk. The storage unit 51 stores various programs, various kinds of data, and the like. For example, the storage unit 51 stores information on the first flight path and the like. In a case of the long-range drone 3, the storage unit stores information on the second flight path and the like.

The microcomputer 52 is a controller, and includes, for example, a microcomputer including a CPU, a ROM, a RAM, an input/output port, and the like, and various circuits. Furthermore, the microcomputer 52 may be configured by hardware such as an integrated circuit such as an ASIC or an FPGA. The microcomputer 52 includes a suspicious object detection unit 53 and a flight control unit 54.

The suspicious object detection unit 53 detects the suspicious object. For example, the suspicious object detection unit 53 executes predetermined image processing on the image captured by the camera 20, and detects the suspicious object. Furthermore, in a case where the short-range drone 11 includes an infrared sensor, the suspicious object detection unit 53, the suspicious object detection unit 35 may detect the suspicious object depending on the detection result by the infrared sensor. The suspicious object detection unit 53 may detect the suspicious object by using a suspicious object detection model in AI.

The flight control unit 54 controls the short-range drone 11 to fly autonomously along the first flight path received from the tracking robot 2 and track the suspicious object. Then, when the suspicious object detection unit 53 detects a suspicious subject, the flight control unit 54 causes the warning light 25 to blink, and further causes the alarm 26 to emit a warning sound and alert the neighboring residents. In a case of moving ahead to the destination of the suspicious object and detecting the suspicious object, the flight control unit 54 may start emitting the warning sound and alerting the neighboring residents by the alarm 26.

Furthermore, the flight control unit 54 may be configured to set the first flight path by itself by performing processing similar to that of the drone control unit 36 of the tracking robot 2. In this case, the flight control unit 54 sets the first flight path to track the detected suspicious object. The flight control unit 54 sets the first flight path based on current position information of the short-range drone 11 and position information where the suspicious object is detected. For example, the flight control unit 54 sets the first flight path based on the position information of the short-range drone 11, a direction in which the suspicious object is detected with respect to the short-range drone 11, and a distance from the short-range drone 11 to the suspicious object.

The flight control unit 54 may set the first flight path based on the predicted escape path of the suspicious object. The predicted escape path is generated by, for example, an escape path prediction model. The escape path prediction model predicts the escape path of the suspicious object from the position information of the short-range drone 11 of when the suspicious object is detected, position information of the tracking mark 21, map information, traffic information, and the like. The position information of the tracking mark 21 includes, for example, history information of the position of the tracking mark 21. Furthermore, in a case of a microcomputer of the long-range drone 3, a flight control unit included in the microcomputer may be configured to set the second flight path by itself by a procedure similar to that of the flight control unit 54 of the short-range drone 11.

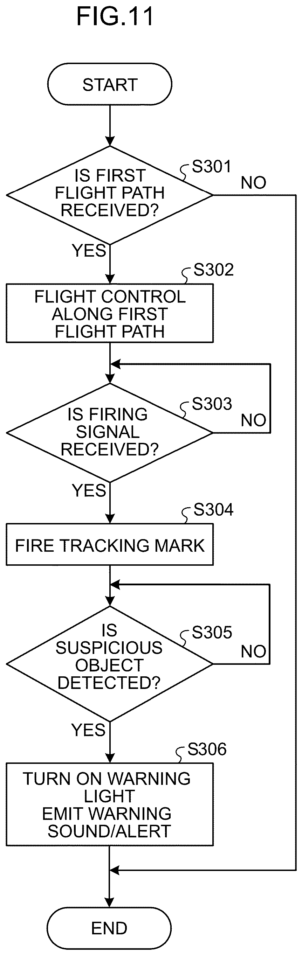

Next, processing executed by the microcomputer 52 of the short-range drone 11 according to the second embodiment will be described with reference to FIG. 11. FIG. 11 is a flowchart for describing processing executed by the microcomputer 52 of the short-range drone 11 according to the second embodiment.

The microcomputer 52 determines whether the first flight path is received from the tracking robot 2 (Step S301). In a case of determining that the first flight path is not received (Step S301: No), the microcomputer 52 ends the current processing.

In a case of determining that the first flight path is received (Step S301: Yes), the microcomputer 52 performs flight control along the first flight path (Step S302). Then, the microcomputer 52 determines whether a firing signal of the tracking mark 21 is received from the tracking robot 2 (Step S303).

In a case of determining that the firing signal is not received (Step S303: No), the microcomputer 52 repeats the determination in Step S303 until the firing signal is received while performing the flight control along the first flight path.

Then, in a case of determining that the firing signal is received (Step S303: Yes), the microcomputer 52 fires the tracking mark 21 (Step S304). Then, the microcomputer 52 determines whether the suspicious object is detected (Step S305).

In a case of determining that the suspicious object is not detected (Step S305: No), the microcomputer 52 repeats the determination in Step S305 until the suspicious object is detected while performing the flight control along the first flight path.

Then, in a case of determining that the suspicious object is detected (Step S305: Yes), the microcomputer 52 causes the warning light 25 to blink, causes the alarm 26 to emit a warning sound and an alerting message to the local residents (Step S306), and ends the processing.

Note that in a case where the microcomputer 52 itself is configured to set the first flight path, the microcomputer 52 first determines whether the suspicious object is detected, and ends the current processing in a case of determining that it is not detected. Then, in a case of determining that the suspicious object is detected, the microcomputer 52 determines and sets the first flight path. Then, the microcomputer 52 executes the processing of Step S302 to Step S306 illustrated in FIG. 11.

In a case of the microcomputer of the long-range drone 3, the microcomputer replaces the first flight path in the flowchart illustrated in FIG. 11 with the second flight path, omits the processing of Step S303 to Step S304, and then executes the processing.

In a case of a configuration in which the microcomputer itself of the long-range drone 3 sets the second flight path, the microcomputer first determines whether the suspicious object is detected, and ends the current processing in a case of determining that it is not detected. In a case of determining that the suspicious object is detected, the microcomputer determines and sets the second flight path. Then, the microcomputer 52 performs flight control along the second flight path and executes the processing of Step S305 to Step S306 illustrated in FIG. 11.

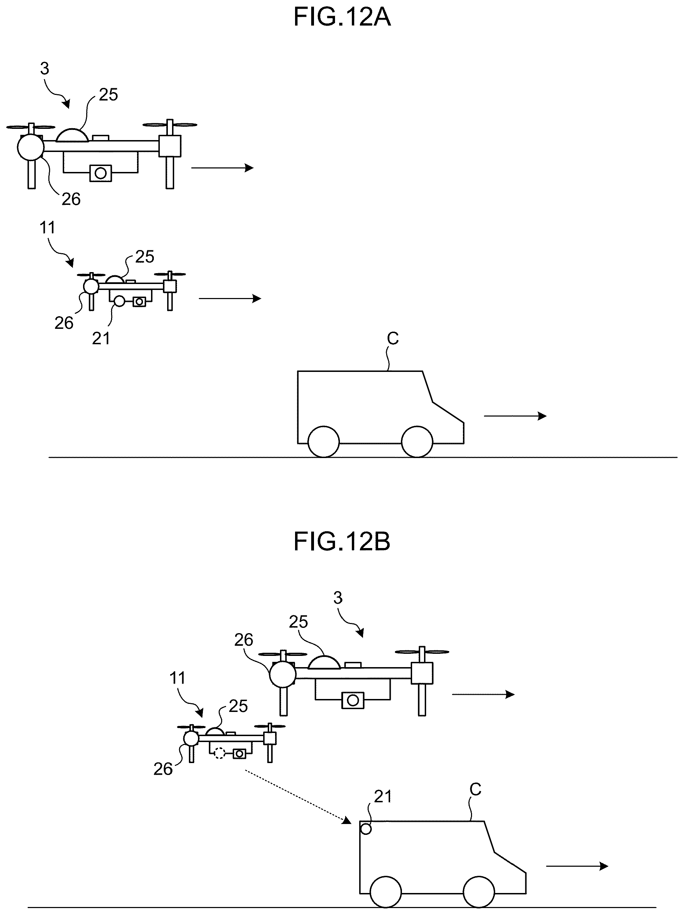

The long-range drone 3 flies based on the position information of the tracking mark 21. Thus, as illustrated in FIG. 12A, in a case where the short-range drone 11 does not fire the tracking mark 21 at a suspicious object C, the long-range drone 3 tracks the short-range drone 11 and flies so as to approach the suspicious object C. Then, as illustrated in FIG. 12B, when the tracking mark 21 is fired from the short-range drone 11 and the tracking mark 21 is attached to the suspicious object C, the long-range drone 3 flies so as to track the suspicious object C. FIG. 12A is a view illustrating a flight example of the long-range drone 3 before the tracking mark 21 is fired. FIG. 12B is a view illustrating a flight example of the long-range drone 3 after the tracking mark 21 is attached to the suspicious object C.

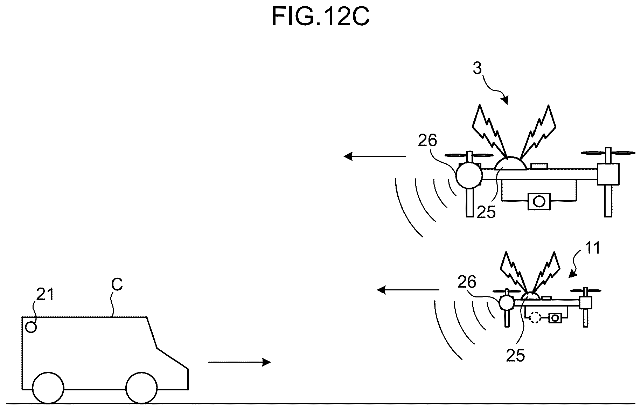

Then, the short-range drone 11 and the long-range drone 3 track the suspicious object C, and move ahead to the destination of the suspicious object and block the traveling direction of the suspicious object C as illustrated in FIG. 12C. Then, when the suspicious object C is detected, the short-range drone 11 and the long-range drone 3 cause the warning light 25 to blink, and cause the alarm 26 to emit a warning sound and an alerting message to the local residents.

In such a manner, the short-range drone 11 and the long-range drone 3 drive the suspicious object C into a direction opposite to the direction toward the short-range drone 11 and the long-range drone 3.

Then, the short-range drone 11 and the long-range drone 3 fly along the flight path that drives the suspicious object C into, for example, the flight position of the other drone, the dead end, the nearest police station, police box, police branch station, or the traveling position of the police vehicle traveling in the vicinity. As a result, the short-range drone 11 and the long-range drone 3 can suppress the escape of the suspicious object. However, in a case where a flight distance from the position where the suspicious object C is first detected to the destination of the suspicious object C is longer than a flyable distance of the short-range drone 11, only the long-range drone 3 travels ahead to the destination of the suspicious object C.

Each of the short-range drone 11 and the long-range drone 3 includes the airframe 23 capable of flying autonomously, the suspicious object detection unit 53, and the flight control unit 54. The suspicious object detection unit 53 detects the suspicious object. In a case where the suspicious object is detected, the flight control unit 54 causes the airframe 23 to fly autonomously along the flight path that tracks the suspicious object and blocks the escape direction of the suspicious object. As a result, the short-range drone 11 and the long-range drone 3 can move ahead to the destination of the suspicious object and block the escape direction of the suspicious object.

Each of the short-range drone 11 and the long-range drone 3 further includes the warning light 25. In a case where the suspicious object is detected, the flight control unit 54 turns on the warning light 25 in such a manner that the suspicious object goes to the direction opposite to the direction toward the airframe 23. As a result, the short-range drone 11 and the long-range drone 3 can drive the suspicious object into the direction opposite to the direction toward the short-range drone 11 and the long-range drone 3.

Each of the short-range drone 11 and the long-range drone 3 further includes the alarm 26. In a case where the suspicious object is detected, the flight control unit 54 causes the alarm 26 to emit a warning sound in such a manner that the suspicious object goes to the direction opposite to the direction toward the airframe 23. As a result, the short-range drone 11 and the long-range drone 3 can drive the suspicious object into the direction opposite to the direction toward the short-range drone 11 and the long-range drone 3.

In a case where the suspicious object is detected, the flight control unit 54 alerts the neighboring residents to the suspicious object by the alarm. As a result, the short-range drone 11 and the long-range drone 3 can protect the safety of the neighboring residents in the escape path of the suspicious object.

In a case where the suspicious object is detected, the flight control unit 54 causes the airframe 23 to fly autonomously along the flight path that drives the suspicious object into the flight position of the other drone. As a result, the short-range drone 11 and the long-range drone 3 can suppress the escape of the suspicious object by running down the suspicious object by the plurality of short-range drones 11 and long-range drones 3.

In a case where the suspicious object is detected, the flight control unit 54 causes the airframe 23 to fly autonomously along the flight path that drives the suspicious object into the dead end. As a result, the short-range drone 11 and the long-range drone 3 can suppress the escape of the suspicious object by running down the suspicious object into the dead end by the short-range drone 11 and the long-range drone 3.

The flight control unit 54 causes the airframe 23 to fly autonomously along the flight path that drives the suspicious object into at least one of the nearest police station, police box, police branch station, and the traveling position of the police vehicle traveling in the vicinity. As a result, the short-range drone 11 and the long-range drone 3 can suppress the escape of the suspicious object by driving the suspicious object into the nearest police station, police box, or police branch station, or the traveling position of the police vehicle traveling in the vicinity by the short-range drone 11 and the long-range drone 3.

The tracking system 1 includes the short-range drone 11, the long-range drone 3, and the tracking robot 2. The tracking robot 2 includes a robot main body 10, a suspicious object detection unit 35, a drone control unit 36, and a robot control unit 37. The robot main body 10 is capable of traveling autonomously where the short-range drone 11 is capable of arriving and departing. The suspicious object detection unit 35 detects the suspicious object around the robot main body 10. The drone control unit 36 controls the short-range drone 11 and the long-range drone 3 so as to track the suspicious object detected by the suspicious object detection unit 35. The robot control unit 37 causes the robot main body 10 to travel autonomously so as to track the suspicious object detected by the suspicious object detection unit 35. As a result, the tracking system 1 can suppress the escape of the suspicious object.

### (Third embodiment)

Here, portions different from those of the above embodiments will be mainly described, and description of configurations, processing, and the like similar to those of the above embodiments will be omitted.

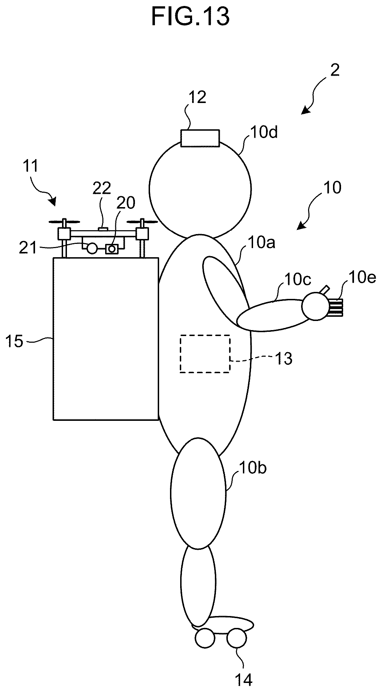

A tracking robot 2 according to the third embodiment will be described with reference to FIG. 13. FIG. 13 is a view schematically illustrating the tracking robot 2 according to the third embodiment.

A robot main body 10 of the tracking robot 2 further includes rollers 14. The rollers 14 are provided in a leg portion 10b. Specifically, the rollers 14 are provided at a lower end of the leg portion 10b. The plurality of rollers 14 is provided for the one leg portion 10b. For example, the one leg portion 10b is provided with the four rollers 14. Note that the number of rollers 14 for the one leg portion 10b is not limited to the above.

The rollers 14 can rotate with respect to the leg portion 10b. For example, the rollers 14 rotate when rotation generated by the motor is transmitted. The robot main body 10 can travel as the rollers 14 rotate.

Each of the rollers 14 may have a speed reduction mechanism such as a gear. In addition, the leg portion 10b is provided with a lock mechanism that is capable of locking the rollers 14 in such a manner as not to rotate. For example, the lock mechanism locks a rotation shaft of the rollers 14.

The lock mechanism locks the rollers 14 in such a manner that the rollers 14 do not rotate with respect to the leg portion 10b, for example, by engagement of a claw portion with the gear provided on a rotation shaft of the rollers 14. When the engagement between the gear and the claw portion is released, the rollers 14 can rotate with respect to the leg portion 10b. Note that the lock mechanism described above is an example, and is not a limitation.

The robot main body 10 can travel by first traveling or second traveling. The first traveling is a method of traveling by movement of the leg portion 10b. The second traveling is a method of traveling by rotation of the rollers 14.

In the first traveling, the rollers 14 are locked by the lock mechanism in such a manner as not to rotate with respect to the leg portion 10b. In the second traveling, the lock of the rollers 14 by the lock mechanism is released.

As a result, the tracking robot 2 can stabilize the traveling in the first traveling.

A traveling speed in the second traveling is faster than a traveling speed in the first traveling. That is, a moving speed of the robot main body 10 by the rollers 14 is faster than the traveling speed of the robot main body 10 by the movement of the leg portion 10b.

As a result, for example, in a case where a suspicious object is detected, the tracking robot 2 can track the suspicious object by traveling by the second traveling. Thus, the tracking robot 2 can catch up with the suspicious object at an early stage, for example. Thus, the tracking robot 2 can improve trackability for the suspicious object.

Fingers 10e are provided at a tip of the arm portion 10c. For example, five fingers 10e are provided at the tip of the arm portion 10c. Each of the fingers 10e is bendable by a driving mechanism such as a motor.

A robot control unit 37 of a control device 13 controls driving of the leg portion 10b, the rollers 14, and the arm portion 10c of the robot main body 10 and causes the robot main body 10 to travel autonomously. The robot control unit 37 controls driving of the leg portion 10b, the rollers 14, and the arm portion 10c of the robot main body 10 in such a manner that the robot main body 10 travels while avoiding obstacles, for example, based on various kinds of information detected by the detection unit 12.

The robot control unit 37 switches a traveling method of the robot main body 10. The robot control unit 37 switches the traveling method of the robot main body 10 to the first traveling by the movement of the leg portion 10b or the second traveling by the rotation of the rollers 14.

As a result, the tracking robot 2 can track the suspicious object while switching the traveling method. Thus, the tracking robot 2 can improve the trackability for the suspicious object.

For example, in a case where the suspicious object is not detected, the robot control unit 37 sets the traveling method of the robot main body 10 to the first traveling. In a case of causing the robot main body 10 to travel by the first traveling, the robot control unit 37 locks the rollers 14 by the lock mechanism in such a manner as not to rotate.

In a case where it is necessary to cause the robot main body 10 to travel at a speed higher than that of the first traveling, the robot control unit 37 sets the traveling method of the robot main body 10 to the second traveling. For example, in a case where the suspicious object is detected and the suspicious object is tracked, the robot control unit 37 sets the traveling method of the robot main body 10 to the second traveling.

In a case of causing the robot main body 10 to travel by the second traveling, the robot control unit 37 stops the movement of the leg portion 10b. For example, the robot control unit 37 sets the leg portion 10b at a predetermined position. The predetermined position is a preset position, and is a position at which the robot main body 10 takes a posture suitable for traveling in the second traveling by the rotation of the rollers 14. For example, the predetermined position is a position at which a center of gravity of the robot main body 10 is at a height that is a half or less of the total length of the tracking robot 2. For example, the predetermined position is a position where the robot main body 10 is in a squatted posture. Furthermore, the robot control unit 37 releases the lock by the lock mechanism and rotates the rollers 14.

Note that even in a case where the tracking of the suspicious object is started, the robot control unit 37 sets the traveling method of the robot main body 10 to the first traveling, for example, in a case where the robot main body 10 goes up and down stairs or goes over a step.

Here, although an example in which the traveling method of the robot main body 10 is switched to the first traveling or the second traveling depending on whether the suspicious object is detected has been described, this is not a limitation. For example, the robot main body 10 may travel mainly by the second traveling, and may travel by the first traveling in a case where the robot main body 10 goes up and down stairs, climbs over a step, or the like. A condition for switching the traveling method of the robot may be settable.

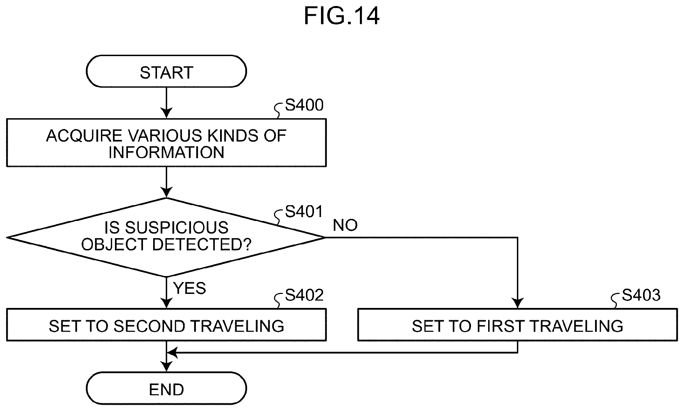

Next, traveling switching processing according to the third embodiment will be described with reference to FIG. 14. FIG. 14 is a flowchart for describing the traveling switching processing according to the third embodiment. The traveling switching processing is executed by the control device 13 of the tracking robot 2.

A control unit 32 acquires various kinds of information detected by a detection unit 12 (S400). The control unit 32 determines whether a suspicious object is detected based on the acquired various kinds of information (S401). For example, the control unit 32 detects the suspicious object by executing predetermined image processing on an image captured by a high-sensitivity camera.

In a case where the suspicious object is not detected (S401: No), the control unit 32 sets the traveling method of the robot main body 10 to the first traveling (S402).

In a case where the suspicious object is detected (S401: Yes), the control unit 32 sets the traveling method of the robot main body 10 to the second traveling (S403).

The tracking robot 2 includes a short-range drone 11, the robot main body 10, the detection unit 12, and the control unit 32. The short-range drone 11 is capable of detecting the suspicious object. The robot main body 10 is capable of traveling autonomously where the short-range drone 11 is capable of arriving and departing. The detection unit 12 detects a situation around the robot main body 10. The control unit 32 controls the short-range drone 11, and causes the robot main body 10 to travel autonomously depending on the situation detected by the detection unit 12. The robot main body 10 includes a body portion 10a, the leg portion 10b, and the rollers 14. The leg portion 10b is movably attached to the body portion 10a. The rollers 14 are provided in the leg portion 10b and move the robot main body 10. The control unit 32 is capable of switching between the first traveling by the movement of the leg portion 10b and the second traveling by the rollers 14.

As a result, the tracking robot 2 can track the suspicious object while switching the traveling method. Thus, the tracking robot 2 can improve the trackability for the suspicious object.

The moving speed of the robot main body 10 in the second traveling is faster than the moving speed of the robot main body 10 in the first traveling.

As a result, for example, in a case where the suspicious object is detected, the tracking robot 2 can track the suspicious object by traveling by the second traveling. Thus, the tracking robot 2 can catch up with the suspicious object at an early stage, for example. Thus, the tracking robot 2 can improve trackability for the suspicious object.

In a case of causing the robot main body 10 to travel by the first traveling, the control unit 32 locks the rollers 14 in such a manner as not to rotate.

As a result, the tracking robot 2 can stabilize the traveling in the first traveling.

The short-range drone 11 is capable of firing the tracking mark 21 toward the suspicious object.

As a result, the tracking robot 2 can track the suspicious object by tracking the tracking mark 21. Thus, the tracking robot 2 can easily discriminate the suspicious object, can easily track the suspicious object, and can accurately discriminate the suspicious object. Thus, the tracking robot 2 can improve trackability for the suspicious object.

### (Fourth embodiment)

Here, portions different from those of the above embodiments will be mainly described, and description of configurations, processing, and the like similar to those of the above embodiments will be omitted.

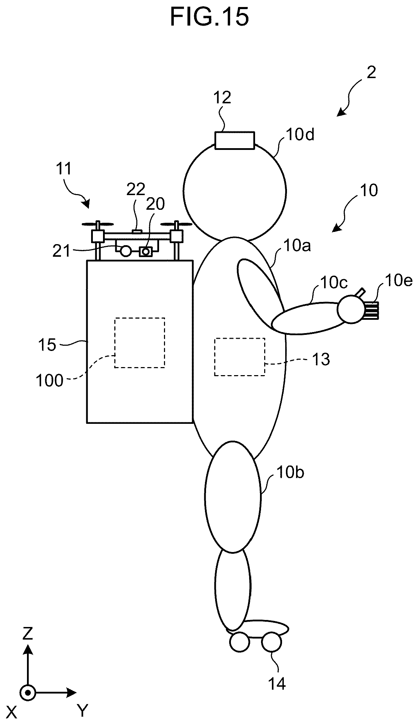

A tracking robot 2 according to the fourth embodiment will be described with reference to FIG. 15. FIG. 15 is a view schematically illustrating the tracking robot 2 according to the fourth embodiment.

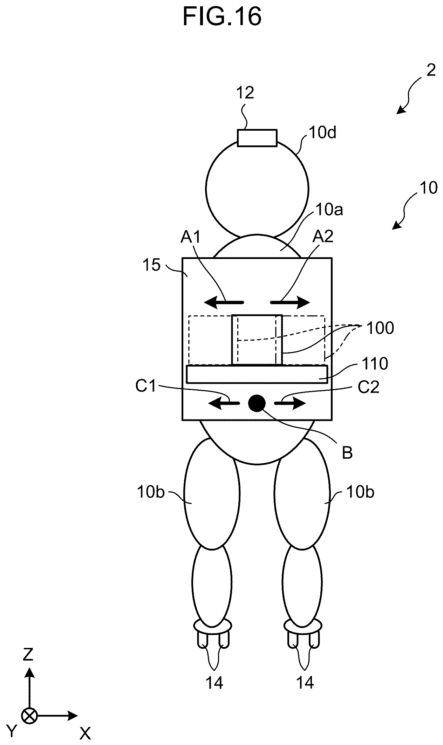

Note that in FIG. 15 and FIG. 16 (described later), for convenience of description, a three-dimensional orthogonal coordinate system in which an X-axis direction, a Y-axis direction, and a Z-axis direction orthogonal to each other are defined, and a Z-axis positive direction is a vertically upward direction is illustrated. Hereinafter, an X-axis positive direction may be referred to as "rightward", an X-axis negative direction may be referred to as "leftward", a Y-axis positive direction may be referred to as "forward", and a Y-axis negative direction may be referred to as "rearward". Thus, in the following description, the X-axis direction may be referred to as a right-left direction, the Y-axis direction may be referred to as a front-rear direction, and the Z-axis direction may be referred to as an up-down direction (vertical direction).

A robot main body 10 of the tracking robot 2 is provided with a battery 100. The robot main body 10 is driven by the battery 100. For example, a secondary battery such as a lithium ion battery or a lead battery can be used as the battery 100. However, this is not a limitation.

Here, the configuration of the battery 100 will be described in detail with reference to FIG. 16. FIG. 16 is a rear view of the tracking robot 2 according to the fourth embodiment as viewed from behind. Note that illustration of a short-range drone 11, an arm portion 10c, and the like is omitted in FIG. 16 for simplification of illustration. For convenience of understanding, the inside of the base portion 15 is illustrated in a transparent manner in FIG. 16.

As illustrated in FIG. 16, the battery 100 is housed (stored) inside the base portion 15. That is, the base portion 15 functions as a housing portion (storage portion) that houses the battery 100. Note that although an example in which the base portion 15 houses the battery 100 is illustrated, this is not a limitation. For example, a housing portion of the battery 100 may be provided separately from the base portion 15.

The battery 100 is configured to be movable with respect to the robot main body 10. For example, the battery 100 is attached to a mounting base 110. The mounting base 110 is fixed inside the base portion 15. The mounting base 110 is provided with a moving mechanism (not illustrated) to move the battery 100. The moving mechanism allows the battery 100 to move on the mounting base 110, specifically, to move in the right-left direction (X-axis direction).

Note that although a rack and pinion mechanism driven by driving force of a motor, a ball screw mechanism driven by driving force of a motor, or the like can be used as the moving mechanism, these are merely examples and are not limitations.

In FIG. 16, a position at or near a center in the right-left direction of the robot main body 10 is set as a reference position, and the battery 100 at the reference position is indicated by a solid line. In addition, a state in which the battery 100 is moved leftward from the reference position is indicated by a broken line (see arrow A1). A state in which the battery 100 is moved rightward from the reference position is indicated by a two-dot chain line (see an arrow A2).

As described above, the tracking robot 2 according to the fourth embodiment can move a gravity center position B of the robot main body 10 by moving the battery 100 with respect to the robot main body 10. Specifically, since the battery 100 is relatively heavy, the gravity center position B of the robot main body 10 can be moved leftward by a leftward movement of the battery 100 from the reference position (see arrow C1). When the battery 100 moves rightward from the reference position, the gravity center position B of the robot main body 10 can be moved rightward (see arrow C2). Note that movement control of moving the battery 100 described above is executed when the robot main body 10 is traveling. This will be described later.

The battery 100 is an example of a moving portion that moves with respect to the robot main body 10. Note that although an example in which the moving portion is the battery 100 has been described here, this is not a limitation. For example, a weight or the like may be used as long as the gravity center position B can be moved. In addition, although an example in which the gravity center position B of the robot main body 10 is near a lower portion of a body portion 10a is illustrated in FIG. 16, this is an example and is not a limitation.

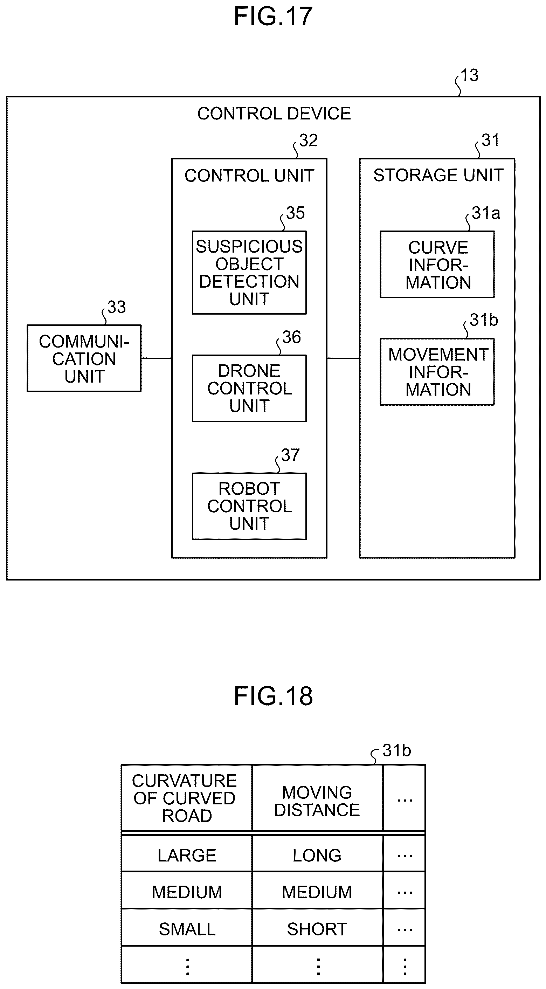

Next, the control device 13 (see FIG. 15) will be described with reference to FIG. 17. FIG. 17 is a functional block diagram schematically illustrating the control device 13 of the tracking robot 2 according to the fourth embodiment.

A storage unit 31 of the control device 13 stores curve information 31a and movement information 31b.

The curve information 31a is information relating to a curved road included in a traveling road on which the robot main body 10 travels. The curve information 31a includes, for example, information relating to a shape of the curved road, position information of the curved road, and the like. The information relating to the shape of the curved road includes, for example, curvature of the curved road indicating a degree of a curve in the curved road.

The movement information 31b is information relating to the movement of the battery 100 described above. The movement information 31b will be described with reference to FIG. 18. FIG. 18 is a view illustrating an example of the movement information 31b. As illustrated in FIG. 18, the movement information 31b includes information such as "curvature of a curved road" and a "moving distance".

The "curvature of a curved road" is information indicating curvature of a curved road. "Large" of the "curvature of a curved road" indicates that the curve is relatively steep in the curved road and the curvature is larger than a predetermined range, for example. "Medium" in the "curvature of a curved road" indicates that, for example, the curve is moderate in the curved road and the curvature is within the predetermined range. "Small" in the "curvature of a curved road" indicates that, for example, the curve is relatively gentle in the curved road and the curvature is smaller than the predetermined range. Note that the predetermined range is set to a range indicating that the curve is moderate.

The "moving distance" is information indicating a moving distance of the battery 100 from the reference position. "Long" in the "moving distance" indicates that the moving distance of the battery 100 from the reference position is relatively long, in other words, indicates that the battery 100 moves from the reference position by a relatively long distance. "Medium" in the "moving distance" indicates that the moving distance of the battery 100 from the reference position is medium, in other words, indicates that the battery 100 moves from the reference position by a medium distance. "Short" in the "moving distance" indicates that the moving distance of the battery 100 from the reference position is relatively short, in other words, indicates that the battery 100 moves from the reference position by a relatively short distance.

In the example of FIG. 18, it is indicated that the moving distance of the battery 100 is "long" in a case where the curvature of the curved road is "large". In addition, it is indicated that the moving distance of battery 100 is "medium" in a case where the curvature of the curved road is "medium". In addition, it is indicated that the moving distance of battery 100 is "short" in a case where the curvature of the curved road is "small".

Note that although an example in which the curvature of the curved road in the movement information 31b is divided into three stages is illustrated in FIG. 18, this is not a limitation, and division into two stages or four or more stages may be performed, for example. In addition, the moving distance of the movement information 31b may be constant regardless of the curvature of the curved road.

The traveling path of the robot main body 10 may include a curved road. When the robot main body 10 travels on the curved road, the robot control unit 37 according to the fourth embodiment moves the battery (moving portion) 100 and moves the gravity center position B of the robot main body 10 (see FIG. 16). Thus, traveling performance of the robot main body 10 can be improved.

Specifically, when the traveling path is set, the robot control unit 37 determines whether a curved road is included in the traveling path. In a case of determining that the traveling path includes the curved road, the robot control unit 37 acquires curve information relating to the curved road from map information or the like, and stores the acquired information in the storage unit 31 as the curve information 31a. Note that the robot control unit 37 may acquire the map information and the curve information from an external server or may acquire information stored in advance in the storage unit 31.

Then, the robot control unit 37 reads the curve information 31a and the movement information 31b in the storage unit 31, and determines the moving distance of the battery 100 when the robot main body 10 travels on the curved road.

For example, in a case where the curvature of the curved road indicating the shape of the curved road in the curve information 31a is larger than the predetermined range (in a case of "large" in the movement information 31b), the robot control unit 37 determines the moving distance of the battery 100 to be a relatively long value ("long" in the movement information 31b). In a case where the curvature of the curved road is within the predetermined range (in a case of "medium" in the movement information 31b), the robot control unit 37 determines the moving distance of the battery 100 to be a medium value ("medium" in the movement information 31b). In addition, in a case where the curvature of the curved road is smaller than the predetermined range (in a case of "small" in the movement information 31b), the robot control unit 37 determines the moving distance of the battery 100 to be a relatively short value ("short" in the movement information 31b).

When the robot main body 10 travels on the curved road, the robot control unit 37 moves the battery 100 and moves the gravity center position B of the robot main body 10. Specifically, when the robot main body 10 travels on the curved road, the robot control unit 37 moves the battery 100 from the reference position toward the inside of the curved road by the determined moving distance, and moves the gravity center position B of the robot main body 10.

Specifically, the robot control unit 37 moves the battery 100 leftward from the reference position in a case where the robot main body 10 travels on a curved road turning leftward, and moves the battery 100 rightward from the reference position in a case where the robot main body 10 travels on a curved road turning rightward.

As described above, in the present embodiment, since the movement control of the battery 100 as described above is performed, the robot main body 10 is capable of turning while moving the gravity center position B to the inside of the curved road. Thus, the posture of the robot main body 10 during traveling on the curved road can be stabilized. As a result, the traveling performance of the robot main body 10 can be improved.

In addition, although the robot control unit 37 moves the battery 100 and moves the gravity center position B of the robot main body 10 when the robot main body 10 travels on the curved road in the traveling states of the first traveling and the second traveling, this is not a limitation. For example, the robot control unit 37 may perform the movement control of the battery 100 only when the robot main body 10 travels on the curved road in the traveling state of the first traveling, or may perform the movement control of the battery 100 only when the robot main body 10 travels on the curved road in the traveling state of the second traveling. That is, the robot control unit 37 only needs to perform the movement control of the battery 100 when the robot main body 10 travels on the curved road in at least one of the first traveling state and the second traveling state.

Note that the moving distance of the battery 100 may be set to be different between the first traveling and the second traveling. Specifically, as described above, the traveling speed in the second traveling is faster than the traveling speed in the first traveling. Thus, for example, even in a case where the robot main body 10 travels on the same curved road, the moving distance of the battery 100 in the second traveling may be set to be longer than the moving distance of the battery 100 in the first traveling, and the gravity center position B in the second traveling may be moved more than that in the first traveling. Thus, the posture during traveling on the curved road can be further stabilized depending on the traveling state (here, the first traveling or the second traveling) of the robot main body 10, and as a result, the traveling performance of the robot main body 10 can be further improved.

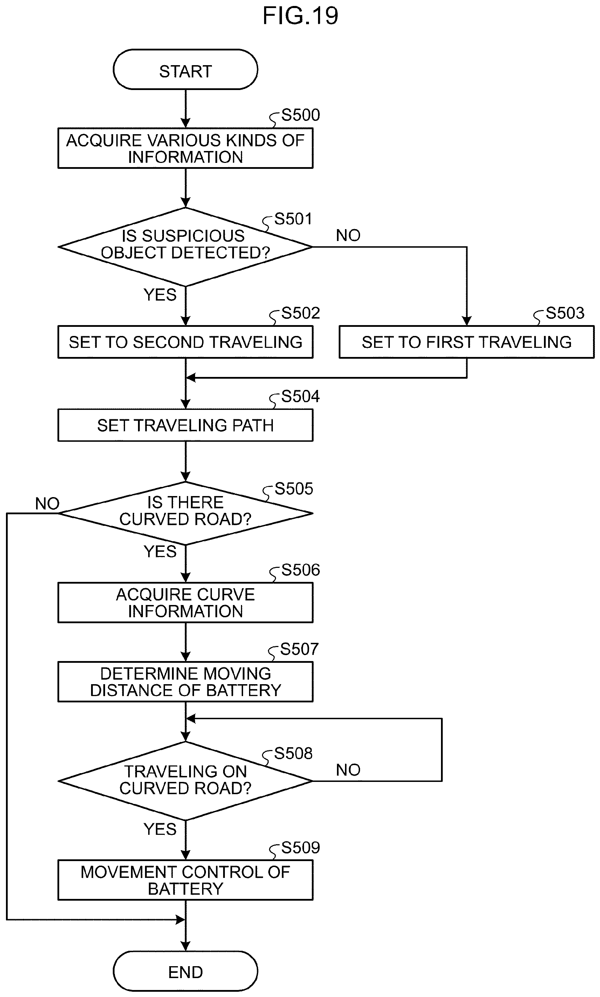

Next, a control processing procedure of the robot main body 10 executed by the control device 13 of the tracking robot 2 will be described with reference to FIG. 19. FIG. 19 is a flowchart illustrating the control processing procedure of the robot main body 10 which procedure is executed by the control device 13.

As illustrated in FIG. 19, the control unit 32 of the control device 13 acquires various kinds of information detected by the detection unit 12 (Step S500). The control unit 32 determines whether a suspicious object is detected based on the acquired various kinds of information (Step S501). For example, the control unit 32 detects the suspicious object by executing predetermined image processing on an image captured by a high-sensitivity camera.

In a case where the suspicious object is not detected (Step S501: No), the control unit 32 sets the traveling method of the robot main body 10 to the first traveling (Step S502).

In a case where the suspicious object is detected (Step S501: Yes), the control unit 32 sets the traveling method of the robot main body 10 to the second traveling (Step S503).

Next, the control unit 32 sets a traveling path of the robot main body 10 (Step S504). Note that in a case where the suspicious object is detected, the control unit 32 sets the traveling path so as to track the suspicious object.

Then, the control unit 32 determines whether the set traveling path includes a curved road (Step S505). In a case of determining that the curved road is not included in the traveling path (Step S505: No), the control unit 32 skips the subsequent processing.

On the other hand, in a case of determining that the traveling path includes the curved road (Step S505: Yes), the control unit 32 acquires curve information of the curved road (Step S506). Then, the control unit 32 determines the moving distance of the battery 100 based on a shape of the curved road in the curve information (Step S507).

Then, the control unit 32 determines whether the robot main body 10 is traveling on the curved road (Step S508). In a case of determining that the robot main body 10 is not traveling on the curved road (Step S508: No), the control unit 32 repeats the processing of Step S508. In a case of determining that the robot main body 10 is traveling on the curved road (Step S508: Yes), the control unit 32 executes movement control of the battery 100 (Step S509). For example, the control unit 32 performs control to move the battery 100 from the reference position toward the inside of the curved road by the moving distance determined in Step S507, and moves the gravity center position B of the robot main body 10.

As described above, the tracking robot 2 according to the embodiment includes the short-range drone (example of a drone) 11, the robot main body 10, the battery (example of a moving portion) 100, the detection unit 12, and the control unit 32. The short-range drone 11 is configured to be capable of tracking the suspicious object. The robot main body 10 is configured to be capable of traveling autonomously where the short-range drone 11 is capable of arriving and departing. The battery 100 is provided in the robot main body 10 and is configured to be movable with respect to the robot main body 10. The detection unit 12 detects a situation around the robot main body 10. The control unit 32 controls the short-range drone 11, and causes the robot main body 10 to travel autonomously depending on the situation detected by the detection unit 12. When the robot main body 10 travels on the curved road, the control unit 32 moves the battery 100 and moves the gravity center position B of the robot main body 10. Thus, the traveling performance of the robot main body 10 traveling on the curved road can be improved.

The moving portion is the battery 100. As a result, the battery 100 can be moved and the gravity center position of the robot main body 10 can be moved with a simple configuration using the battery 100 provided in the robot main body 10.

Furthermore, the robot main body 10 includes the body portion 10a, a leg portion 10b, and a roller 14. The leg portion 10b is movably attached to the body portion 10a. The roller 14 is provided on the leg portion 10b and moves the robot main body 10. The control unit 32 is capable of switching between the first traveling by the movement of the leg portion 10b and the second traveling by the roller 14, and moves the battery 100 and moves the gravity center position of the robot main body 10 when the robot main body 10 travels on the curved road in at least one of the first traveling and the second traveling. Thus, the posture during traveling on the curved road can be stabilized depending on the traveling state (such as the first traveling or second traveling) of the robot main body 10, and as a result, the traveling performance of the robot main body 10 can be further improved.

In addition, the control unit 32 acquires the curve information relating to the shape of the curved road included in the traveling path of the robot main body 10, and determines the moving distance of the battery 100 based on the shape of the curved road of the acquired curve information. As a result, the moving distance of the battery 100 based on the shape of the curved road can be determined. Thus, the posture of the robot main body 10 during traveling on the curved road can be further stabilized, and the traveling performance of the robot main body 10 can be further improved.

In addition, a suspicious object tracking path is generated by a text generation model. As a result, for example, a traveling path including the tracking path can be generated with high accuracy.

### (Fifth embodiment)

Here, portions different from those of the above embodiments will be mainly described, and description of configurations, processing, and the like similar to those of the above embodiments will be omitted. In the fifth embodiment, a tracking robot 60 is different from the tracking robot 2 according to the above embodiments.

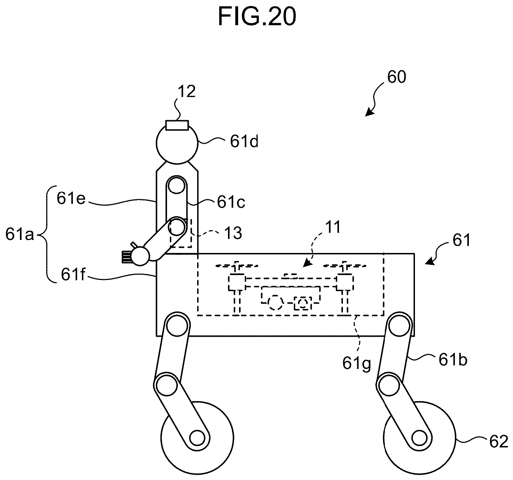

As illustrated in FIG. 20, the tracking robot 60 includes a robot main body 61, a short-range drone 11, a detection unit 12, and a control device 13. FIG. 20 is a view for schematically describing the tracking robot 60 according to the fifth embodiment.

The robot main body 61 includes a body portion 61a, leg portions 61b, arm portions 61c, and a head 61d. The body portion 61a includes an upper body portion 61e and a housing portion 61f.

The arm portions 61c and the head 61d are movably attached to the upper body portion 61e. The housing portion 61f is provided below the upper body portion 61e. Note that the upper body portion 61e may be movably attached to the housing portion 61f. For example, the upper body portion 61e is attached to the housing portion 61f so as to be rotatable in the front-rear direction and the right-left direction. In addition, the upper body portion 61e may be attached so as to be rotatable about a virtual axis in the up-down direction.

The housing portion 61f is formed in a box shape. The housing portion 61f is formed so as to open upward. That is, the housing portion 61f has a bottom portion 61g and is formed so as to be recessed downward from above.

The short-range drone 11 is housed in the housing portion 61f. The short-range drone 11 arrives at and departs from the housing portion 61f. Specifically, the short-range drone 11 arrives at and departs from the bottom portion 61g of the housing portion 61f.

The leg portions 61b are movably attached to the housing portion 61f. The three or more leg portions 61b are provided. Specifically, the four leg portions 61b are provided. The four leg portions 61b are provided one each at right and left ends on the front side, and one each at right and left ends on the rear side.

Rollers 62 are provided at lower ends of the leg portions 61b. For example, one roller 62 is provided in the one leg portion 61b. Note that the number of rollers 62 for the one leg portion 61b is not limited to the above. A rotation speed of each of the rollers 62 is controllable. For example, the rotation speed of each of the rollers 62 is controllable so as to be the same rotation speed.

Furthermore, the rotation speed of at least a part of the rollers 62 is controllable so as to be a rotation speed different from that of the other rollers 62. For example, when the rotation speed of the rollers 62 on the left side is made slower than the rotation speed of the rollers 62 on the right side, the robot main body 61 can turn left.

In addition, a rotation direction of each of the rollers 62 is controllable. Furthermore, the robot main body 61 may be capable of changing a steering angle of the leg portions 61b or the rollers 62.

The robot main body 61 can travel by first traveling and second traveling by the four leg portions 61b.

The arm portions 61c are movably attached to the upper body portion 61e. The arm portions 61c are provided one each at right and left ends of the upper body portion 61e. That is, the two arm portions 61c are provided. Note that the number of arm portions 61c is not limited to the above. For example, one or three or more arm portions 61c may be provided in the upper body portion 61e.

Note that in the robot main body 61, a motor is provided as a joint that connects each portion at a position where portions are movably connected, for example, at a position corresponding to a joint portion of a person. Various movements of the robot main body 61 are realized by movement of the portions by the motors. In addition, the motors can absorb vibration of the robot main body 61.

In addition, a detection sensor such as a gyroscope that detects movement or the like of each portion is provided at each of positions where the portions are movably connected. Thus, vibration of each portion and movement of each portion can be detected by the detection sensor.

The robot control unit 37 (see FIG. 3) can control each of the motors depending on various kinds of information detected by the detection unit 12 and a detection result by the detection sensor such as the gyroscope, for example, control weight movement of the robot main body 61, and adjust balance of the robot main body 61.

Note that the robot main body 61 is not limited to be used in the tracking system 1. The robot main body 61 may be, for example, a cart robot that picks up a package (item) in a warehouse. The package is stored in the housing portion 61f. The robot main body 61 takes out a designated package (item) from a shelf of the warehouse and conveys it to a designated delivery place. Furthermore, the robot main body 61 may convey a package in a building such as an office building.

Although the present invention has been described with reference to the embodiments, the technical scope of the present invention is not limited to the scope described in the above embodiments. It is apparent to those skilled in the art that various modifications or improvements can be added to the above embodiments. It is apparent from the description of the claims that modes to which such modifications or improvements are added can also be included in the technical scope of the present invention.

It should be noted that the execution order of processing such as operations, procedures, steps, and stages in the devices, systems, programs, and methods illustrated in the claims, the specification, and the drawings can be realized in any order unless "before", "prior to", or the like is specifically clearly indicated, and unless an output of previous processing is used in later processing. Even when the operation flow in the claims, the specification, and the drawings is described with "first", "then", or the like for convenience, it does not mean that it is essential to perform it in this order. Reference Signs List
1 TRACKING SYSTEM
2, 60 TRACKING ROBOT
3 LONG-RANGE DRONE
4 MANAGEMENT DEVICE
10, 61 ROBOT MAIN BODY
10a, 61a BODY PORTION
10b, 61b LEG PORTION
11 SHORT-RANGE DRONE
12 DETECTION UNIT
13 CONTROL DEVICE
14, 62 ROLLER
20 CAMERA
21 TRACKING MARK
32 CONTROL UNIT
35 SUSPICIOUS OBJECT DETECTION UNIT
36 DRONE CONTROL UNIT
37 ROBOT CONTROL UNIT
61f HOUSING PORTION

## Claims

1. A tracking robot comprising:
a drone capable of tracking a suspicious object and firing a tracking mark toward the suspicious object;
a robot main body capable of traveling autonomously in which the drone is capable of arriving and departing;
a detection unit that detects a situation around the robot main body; and
a control unit that controls the drone and causes the robot main body to travel autonomously depending on the situation detected by the detection unit, wherein
in a case where the suspicious object is detected, the control unit causes the drone to depart from the robot main body and fires the tracking mark from the drone toward the suspicious object.

2. The tracking robot according to claim 1, wherein
the tracking mark acquires position information of the tracking mark and transmits the position information of the tracking mark.

3. The tracking robot according to claim 1, wherein
position information of the tracking mark is transmitted to a tracking drone having a longer flight distance than the drone, and
the tracking drone flies so as to track the suspicious object based on the position information of the tracking mark.

4. The tracking robot according to claim 1, wherein
the control unit controls at least one of the robot main body and the drone so as to track the suspicious object based on a predicted escape path predicted from position information of the tracking mark.

5. The tracking robot according to claim 1, wherein
at least one piece of information relating to a traveling path of the robot main body, a flight path of the drone, and a flight path of a tracking drone having a longer flight distance than the drone is generated by a text generation model.

6. A tracking system comprising:
the tracking robot according to any one of claims 1 to 5; and
a tracking drone having a longer flight distance than the drone.

7. A drone comprising:
an airframe capable of flying autonomously;
a suspicious object detection unit that detects a suspicious object; and
a flight control unit that causes the airframe to fly autonomously so as to fly along a flight path that tracks the suspicious object and blocks an escape direction of the suspicious object in a case where the suspicious object is detected.

8. A tracking robot comprising:
a drone capable of tracking a suspicious object;
a robot main body capable of traveling autonomously in which the drone is capable of arriving and departing;
a detection unit that detects a situation around the robot main body; and
a control unit that controls the drone and causes the robot main body to travel autonomously depending on the situation detected by the detection unit, wherein
the robot main body includes
a body portion,
a leg portion movably attached to the body portion, and
a roller that is provided on the leg portion and that moves the robot main body, and
the control unit is capable of switching between first traveling by movement of the leg portion and second traveling by the roller.

9. A tracking robot comprising:
a drone capable of tracking a suspicious object;
a robot main body capable of traveling autonomously in which the drone is capable of arriving and departing;
a moving portion that is provided on the robot main body and that is capable of moving with respect to the robot main body;
a detection unit that detects a situation around the robot main body; and
a control unit that controls the drone and causes the robot main body to travel autonomously depending on the situation detected by the detection unit, wherein
when the robot main body travels on a curved road, the control unit moves the moving portion so as to move a gravity center position of the robot main body.
